# EUROPEAN PATENT APPLICATION

(11) **EP 4 838 688 A1**
(43) Date of publication of application: **11.11.2026**
(21) Application number: 24914915.4
(22) Date of filing: 27.09.2024
(51) Int. Cl.: H01M 50/593

(54) **BATTERY CELL, BATTERY, AND ELECTRIC DEVICE**

(30) Priority: 03.01.2024 WO PCT/CN2024/070465
(71) Applicant: Contemporary Amperex Technology Co., Limited, Ningde, Fujian 352100 (CN)
(72) Inventor: HUANG, Siying, Ningde, Fujian 352100 (CN); KE, Jianhuang, Ningde, Fujian 352100 (CN); ZUO, Yongtao, Ningde, Fujian 352100 (CN); LI, Yao, Ningde, Fujian 352100 (CN); CHEN, Shilong, Ningde, Fujian 352100 (CN); CAI, Jiajin, Ningde, Fujian 352100 (CN)
(74) Representative: Ran, Handong
(86) International application number: PCT/CN2024/122043
(87) International publication number: WO 2025/145694

(57) **Abstract**

A battery cell (20), a battery (100), and an electric device. The battery cell (20) comprises a casing (21), electrode assemblies (22), first insulating members (23), and second insulating members (24), wherein the casing (21) is provided with a first wall portion (213), and the electrode assemblies (22) are accommodated in the casing (21). The electrode assemblies (22) comprise a first electrode lead-out portion (222) and main body portions (221), wherein the first electrode lead-out portion (222) is arranged at the end of the main body portions (221) facing the first wall portion (213) in a first direction. In the first direction, the first insulating members (23) are arranged on the surface of the first wall portion (213) facing the electrode assemblies (22), and the first insulating members (23) are used for insulating the first electrode lead-out portion (222) from the first wall portion (213). In the first direction, at least part of the second insulating members (24) is arranged between the first electrode lead-out portion (222) and the first wall portion (213). The material damage temperature of the second insulating members (24) is greater than the material damage temperature of the first insulating members (23), and the second insulating members (24) can insulate the first electrode lead-out portion (222) from the first wall portion (213) when the first insulating members (23) have melted. When the first insulating members (23) have melted, the second insulating members (24) can still exert the insulation effect, thereby reducing the risk of short circuit and improving the reliability of the battery (100).

## Description

### CROSS-REFERENCE TO RELATED APPLICATIONS

The present application claims priority to the international patent application filed on January 3, 2024 (Application Number: PCT/CN2024/070465) and entitled "BATTERY CELL, BATTERY, AND ELECTRIC DEVICE", which is incorporated herein by reference in its entirety.

### TECHNICAL FIELD

The present application relates to the field of batteries, and specifically relates to a battery cell, a battery, and an electric device.

### BACKGROUND

Batteries are widely used in the new energy field, such as electric vehicles and new energy vehicles, and new energy vehicles and electric vehicles have become a new development trend in the automotive industry. The development of battery technology requires consideration about various design factors at the same time, for example, performance parameters such as battery life, energy density, discharge capacity, and charge-discharge rate. In addition, the reliability of the battery also needs to be considered. However, current batteries are poor in reliability.

### SUMMARY

Embodiments of the present application are intended to provide a battery cell, a battery, and an electric device, to alleviate the problem of poor reliability of batteries in related technologies.

According to a first aspect, an embodiment of the present application provides a battery cell. The battery cell includes a housing, an electrode assembly, a first insulating member, and a second insulating member. The housing has a first wall portion. The electrode assembly is accommodated in the housing. The electrode assembly includes a first electrode lead-out portion and a main body portion. The first electrode lead-out portion is provided at an end of the main body portion facing the first wall portion along a first direction. Along the first direction, the first insulating member is provided on a surface of the first wall portion facing the electrode assembly, and the first insulating member is configured to insulate and isolate the first electrode lead-out portion and the first wall portion. Along the first direction, at least a portion of the second insulating member is provided between the first electrode lead-out portion and the first wall portion. A material damage temperature of the second insulating member is higher than a material damage temperature of the first insulating member, and the second insulating member is configured to insulate and isolate the first electrode lead-out portion and the first wall portion when the first insulating member is melted.

In this technical solution, the battery cell is provided with the first insulating member and the second insulating member. During normal use, both the first insulating member and the second insulating member can insulate and isolate the first electrode lead-out portion and the first wall portion, reducing the risk of short circuit caused by contact between the first electrode lead-out portion and the first wall portion. Since the material damage temperature of the second insulating member is higher than the material damage temperature of the first insulating member, when thermal runaway occurring in another battery cell adjacent to the battery cell causes the first insulating member of the battery cell to be melted, the second insulating member can still play a role in insulating and isolating the first electrode lead-out portion and the first wall portion to some extent, reducing the risk of short circuit caused by contact between the first electrode lead-out portion and the first wall portion. In this way, even if thermal runaway occurs in another battery cell adjacent to the battery cell, it is less likely to cause short circuit in the battery cell and thus avoids continuing to trigger thermal runaway, which is conducive to limiting heat diffusion and improving the reliability of the battery cell.

In an optional technical solution of this embodiment of the present application, the second insulating member is connected to the first electrode lead-out portion.

In this technical solution, by connecting the second insulating member to the first electrode lead-out portion, on one hand, since the first insulating member is provided on the surface of the first wall portion facing the electrode assembly, the second insulating member is connected to the first electrode lead-out portion more conveniently and is less likely to interfere with the first insulating member; and on the other hand, the connection of the second insulating member to the first electrode lead-out portion limits relative positions of the second insulating member and the first electrode lead-out portion, so that the second insulating member can be stably located between the first electrode lead-out portion and the first wall portion, thereby insulating and isolating the first electrode lead-out portion and the first wall portion.

In an optional technical solution of this embodiment of the present application, the battery cell includes a first electrode terminal, and the first electrode terminal is provided on the first wall portion. The first electrode lead-out portion includes a first tab and a first current collecting member. The first tab is connected to an end of the main body portion facing the first wall portion along the first direction, and the first current collecting member connects the first electrode terminal and the first tab. The second insulating member is connected to the first current collecting member, and along the first direction, at least a portion of the second insulating member is located between the first current collecting member and the first wall portion.

In this technical solution, the first tab is connected to the first electrode terminal through the first current collecting member, and the first current collecting member has a risk of coming into contact with the first wall portion to cause a short circuit. Therefore, by connecting the second insulating member to the first current collecting member and making at least a portion of the second insulating member located between the first current collecting member and the first wall portion, the first current collecting member is isolated from the first wall portion, reducing the risk of short circuit in the battery cell, thereby helping to improve the reliability of the battery cell.

In an optional technical solution of this embodiment of the present application, the first current collecting member includes a body portion and a protrusion portion. The protrusion portion protrudes from the body portion along the first direction, the body portion is connected to the first tab, and the protrusion portion is connected to the first electrode terminal. Along the first direction, the body portion has a first surface closest to the first wall portion, and the second insulating member covers at least a portion of the first surface.

In this technical solution, the first surface is a surface of the body portion closest to the first wall portion. To be specific, the first surface is a surface on the first current collecting member that is most likely to come into contact with the first wall portion to cause a short circuit. By making the second insulating member cover at least a portion of the first surface, the first current collecting member and the first wall portion are insulated and isolated, so that the second insulating member has a good insulating effect, which is conducive to reducing the risk of short circuit in the battery cell and improving the reliability of the battery cell.

In an optional technical solution of this embodiment of the present application, along the first direction, the body portion includes a first connecting portion and a second connecting portion, the second connecting portion is connected to the first connecting portion, and the first tab is connected to the first connecting portion. Along the first direction, a surface of the first connecting portion facing the first wall portion is the first surface, the second connecting portion has a second surface facing the first wall portion, the first surface is closer to the first wall portion than the second surface, the protrusion portion protrudes from the second surface, and the second insulating member covers at least a portion of the second surface.

In this technical solution, the body portion includes the first surface and the second surface, where the first surface is a surface closest to the first wall portion, and a distance between the second surface and the first wall portion is greater than a distance between the first surface and the first wall portion. Since both the first surface and the second surface have the risk of coming into contact with the first wall portion to cause a short circuit, by making the second insulating member cover at least a portion of the first surface and at least a portion of the second surface, the first current collecting member and the first wall portion are better insulated and isolated, so that the second insulating member has a better insulating effect, which is conducive to further reducing the risk of short circuit in the battery cell, thereby helping to further improve the reliability of the battery cell.

In an optional technical solution of this embodiment of the present application, the battery cell includes a plurality of electrode assemblies, the plurality of electrode assemblies are arranged along a second direction, and the second direction intersects the first direction. The second surface includes a covered region covered by the second insulating member and an uncovered region not covered by the second insulating member. Along the second direction, two sides of the uncovered region are both connected to the covered region, and the protrusion portion is provided on the uncovered region.

In this technical solution, the two sides of the uncovered region are both connected to the covered region. In comparison, the covered region is closer to another battery cell adjacent to the battery cell. When thermal runaway occurs in the another battery cell, along the second direction, regions of the first insulating member near two ends have higher temperatures and are more likely to be melted, while a position of the first insulating member near the middle has a lower temperature and is relatively less likely to be melted. The covered region corresponds to the regions of the first insulating member that are likely to be melted, and the uncovered region corresponds to the region of the first insulating member that is relatively less likely to be melted. The first insulating member and the second insulating member cooperate to effectively insulate and isolate the first current collecting member and the first wall portion, which is conducive to reducing the risk of short circuit in the battery cell and improving the reliability of the battery cell.

In an optional technical solution of this embodiment of the present application, along the second direction, a minimum width of the second insulating member is D, satisfying: D ≥ 5 mm.

In this technical solution, when D ≥ 5 mm, the second insulating member has a larger minimum width along the second direction and thus has a better insulating effect.

In an optional technical solution of this embodiment of the present application, 5 mm ≤ D ≤ 25 mm.

In this technical solution, when D ≥ 5 mm, the second insulating member has a larger minimum width along the second direction and thus has a better insulating effect. When D ≤ 25 mm, the minimum width of the second insulating member along the second direction is not too large, which on one hand is conducive to reducing the risk of interference between the second insulating member and another component, and on the other hand is conducive to reducing material consumption of the second insulating member and reducing the costs of the battery cell.

In an optional technical solution of this embodiment of the present application, the battery cell includes a plurality of electrode assemblies, the plurality of electrode assemblies are arranged along a second direction, and the second direction intersects the first direction. The body portion includes a plurality of first connecting portions, the plurality of first connecting portions are arranged at intervals along the second direction, the second connecting portion connects the plurality of first connecting portions, and each first connecting portion is connected to the first tab of one electrode assembly.

In this technical solution, each first connecting portion is connected to the first tab of one electrode assembly, and the second connecting portion connects the plurality of first connecting portions to achieve electrical connection between the first current collecting member and the first tabs of the plurality of electrode assemblies 22. The connection of the first tabs of the plurality of electrode assemblies to the first electrode terminal through the first current collecting member is conducive to reducing the assembly difficulty between the first tab and the first electrode terminal.

In an optional technical solution of this embodiment of the present application, along the first direction, the second insulating member covers an entire region of a surface of the body portion facing the first wall portion that is not occupied by the protrusion portion.

In this technical solution, by making the second insulating member cover the entire region of the surface of the body portion facing the first wall portion that is not occupied by the protrusion portion, the second insulating member has a better insulating effect, further reducing the risk of short circuit in the battery cell, thereby helping to improve the reliability of the battery cell.

In an optional technical solution of this embodiment of the present application, the second insulating member is provided with an avoidance hole, and the protrusion portion passes through the avoidance hole and is connected to the first electrode terminal.

In this technical solution, the provision of an avoidance hole on the second insulating member to avoid the protrusion portion facilitates the connection between the protrusion portion and the first electrode terminal, which is conducive to reducing material consumption of the second insulating member. In addition, since the protrusion portion passes through the avoidance hole, the cooperation between the avoidance hole and the protrusion portion can limit the second insulating member, making the second insulating member less likely to be deviated or displaced, thereby allowing the second insulating member to better perform an insulating function.

In an optional technical solution of this embodiment of the present application, the first tab is connected to a side of the first current collecting member facing away from the first wall portion.

In this technical solution, when the first tab is connected to the side of the first current collecting member facing away from the first wall portion, the first current collecting member is more likely to come into contact with the first wall portion to cause a short circuit as compared to the first tab. In this case, by connecting the second insulating member to the first current collecting member and making at least a portion of the second insulating member located between the first current collecting member and the first wall portion, the first current collecting member and the first wall portion are insulated and isolated, so that the second insulating member can exert a better insulating effect, further reducing the risk of short circuit in the battery cell, thereby helping to improve the reliability of the battery cell.

In an optional technical solution of this embodiment of the present application, the battery cell includes a first electrode terminal, and the first electrode terminal is provided on the first wall portion. The first electrode lead-out portion includes a first tab and a first current collecting member. The first tab is connected to an end of the main body portion facing the first wall portion along the first direction, the first tab is connected to a surface of the first current collecting member facing the first wall portion, and the first current collecting member is connected to the first electrode terminal; where the second insulating member is connected to a surface of the first tab closest to the first wall portion.

In this technical solution, the first tab is connected to the first electrode terminal through the first current collecting member, but the first tab is connected to the surface of the first current collecting member facing the first wall portion. Therefore, the first tab is more likely to come into contact with the first wall portion to cause a short circuit as compared to the first current collecting member. In this case, by connecting the second insulating member to the surface of the first tab closest to the first wall portion, the first tab and the first wall portion are insulated and isolated, so that the second insulating member can exert a better insulating effect, further reducing the risk of short circuit in the battery cell, thereby helping to improve the reliability of the battery cell.

In an optional technical solution of this embodiment of the present application, the battery cell includes a first electrode terminal, and the first electrode terminal is provided on the first wall portion. The first electrode lead-out portion includes a first tab, the first tab is connected to the first electrode terminal; where the second insulating member is connected to the first tab, and along the first direction, at least a portion of the second insulating member is located between the first tab and the first wall portion.

In this technical solution, the first tab is directly connected to the first electrode terminal. By connecting the second insulating member to the first tab and making at least a portion of the second insulating member located between the first tab and the first wall portion, the first tab and the first wall portion are insulated and isolated, so that the second insulating member has a better insulating effect, further reducing the risk of short circuit in the battery cell, thereby helping to improve the reliability of the battery cell.

In an optional technical solution of this embodiment of the present application, along the first direction, a projection of the second insulating member does not overlap with a projection of the first electrode terminal.

In this technical solution, by making the projection of the second insulating member along the first direction not overlap with the projection of the first electrode terminal along the first direction, the risk of interference caused by the second insulating member to the connection between the first electrode terminal and the first tab is reduced, facilitating the connection between the first electrode terminal and the first tab.

In an optional technical solution of this embodiment of the present application, the second insulating member is provided with an avoidance hole, and the first electrode terminal passes through the avoidance hole and is connected to the first tab.

In this technical solution, the provision of an avoidance hole on the second insulating member to avoid the first electrode terminal facilitates the connection between the first tab and the first electrode terminal, which is conducive to reducing material consumption of the second insulating member. In addition, since the first electrode terminal passes through the avoidance hole, the cooperation between the avoidance hole and the first electrode terminal can limit the second insulating member, making the second insulating member less likely to be deviated or displaced, thereby allowing the second insulating member to better perform an insulating function.

In an optional technical solution of this embodiment of the present application, the second insulating member is adhered to the first electrode lead-out portion.

In this technical solution, by adhering the second insulating member to the first electrode lead-out portion, the second insulating member is simply and conveniently connected to the first electrode lead-out portion, which is conducive to limiting the position of the second insulating member, allowing the second insulating member to stably exert an insulating effect.

In an optional technical solution of this embodiment of the present application, the second insulating member wraps the first electrode lead-out portion.

In this technical solution, by making the second insulating member wrap the first electrode lead-out portion, on one hand, the first electrode lead-out portion can be well covered, so that the first electrode lead-out portion and the first wall portion are insulated and isolated. On the other hand, when the second insulating member wraps the first electrode lead-out portion, the second insulating member is less likely to be deviated or displaced relative to the first electrode lead-out portion, thereby allowing the second insulating member to better perform an insulating function.

In an optional technical solution of this embodiment of the present application, the second insulating member is an insulating film connected to the first electrode lead-out portion.

In this technical solution, the second insulating member is an insulating film. The insulating film can effectively insulate and isolate the first electrode lead-out portion and the first wall portion without occupying too much space inside the housing, so that the battery cell can still have a high energy density.

In an optional technical solution of this embodiment of the present application, a thickness of the insulating film is H, satisfying: 0.01 mm ≤ H ≤ 0.5 mm.

In this technical solution, when H ≥ 0.01 mm, the thickness of the insulating film is larger, so that the insulating film is less likely to be fractured, and thus has better mechanical properties and insulating effect. When H ≤ 0.5 mm, the thickness of the insulating film is not too large, which is conducive to reducing the occupation of the internal space of the battery cell, thereby increasing the energy density of the battery cell. Therefore, when 0.01 mm ≤ H ≤ 0.5 mm, the insulating effect of the insulating film and the energy density of the battery cell can be balanced.

In an optional technical solution of this embodiment of the present application, 0.05 mm ≤ H ≤ 0.2 mm.

In this technical solution, when H ≥ 0.05 mm, the thickness of the insulating film is larger, so that the insulating film is even less likely to be fractured, and thus has better mechanical properties and insulating effect. When H ≤ 0.2 mm, the thickness of the insulating film is not too large, which is conducive to reducing the occupation of the internal space of the battery cell, thereby increasing the energy density of the battery cell. Therefore, when 0.05 mm ≤ H ≤ 0.2 mm, the insulating effect of the insulating film and the energy density of the battery cell can be better balanced.

In an optional technical solution of this embodiment of the present application, the housing has a third wall portion, the third wall portion is adjacent to the first wall portion, and the third wall portion is a wall portion with the largest outer surface area in the housing. The second insulating member includes a first insulating portion and a second insulating portion, at least a portion of the first insulating portion is provided between the first electrode lead-out portion and the first wall portion along the first direction, and at least a portion of the second insulating portion is provided between the first electrode lead-out portion and the third wall portion along a thickness direction of the third wall portion.

In this technical solution, at least a portion of the first insulating portion is provided between the first electrode lead-out portion and the first wall portion along the first direction. During normal use, both the first insulating member and the first insulating portion can insulate and isolate the first electrode lead-out portion and the first wall portion, reducing the risk of short circuit caused by contact between the first electrode lead-out portion and the first wall portion. Since the material damage temperature of the second insulating member is higher than the material damage temperature of the first insulating member, when thermal runaway occurring in another battery cell adjacent to the battery cell causes the first insulating member of the battery cell to be melted, the first insulating portion can still play a role in insulating and isolating the first electrode lead-out portion and the first wall portion to some extent, reducing the risk of short circuit caused by contact between the first electrode lead-out portion and the first wall portion. In addition, at least a portion of the second insulating portion is provided between the first electrode lead-out portion and the third wall portion along the thickness direction of the third wall portion to insulate and isolate the first electrode lead-out portion and the third wall portion. Since the material damage temperature of the second insulating member is higher, when thermal runaway occurs in another battery cell adjacent to the battery cell, the second insulating portion can still play a role in insulating and isolating the first electrode lead-out portion and the third wall portion to some extent, reducing the risk of short circuit caused by contact between the first electrode lead-out portion and the third wall portion. In this way, even if thermal runaway occurs in another battery cell adjacent to the battery cell, it is less likely to cause short circuit in the battery cell and thus avoids continuing to trigger thermal runaway, which is conducive to limiting heat diffusion and improving the reliability of the battery cell.

In an optional technical solution of this embodiment of the present application, along the thickness direction of the third wall portion, a projection of the first electrode lead-out portion is entirely located within the second insulating portion.

In this technical solution, the projection of the first electrode lead-out portion along the thickness direction of the third wall portion is entirely located within the second insulating portion, that is, the second insulating portion completely separates the first electrode lead-out portion and the third wall portion. This is conducive to improving the insulating effect of the second insulating portion, thereby reducing the risk of short circuit caused by contact between the first electrode lead-out portion and the third wall portion.

In an optional technical solution of this embodiment of the present application, along the thickness direction of the third wall portion, a portion of the second insulating portion is provided between the main body portion and the third wall portion.

In this technical solution, a portion of the second insulating portion is provided between the main body portion and the third wall portion along the thickness direction of the third wall portion to insulate and isolate the main body portion and the third wall portion. Since the material damage temperature of the second insulating member is higher, when thermal runaway occurs in another battery cell adjacent to the battery cell, the second insulating portion can still play a role in insulating and isolating the main body portion and the third wall portion to some extent, reducing the risk of short circuit caused by contact between the main body portion and the third wall portion. In this way, even if thermal runaway occurs in another battery cell adjacent to the battery cell, it is less likely to cause short circuit in the battery cell and thus avoids continuing to trigger thermal runaway, which is conducive to limiting heat diffusion and improving the reliability of the battery cell.

In an optional technical solution of this embodiment of the present application, the second insulating portion is connected to the main body portion.

In this technical solution, by connecting the second insulating portion to the main body portion, on one hand, relative positions of the second insulating portion and the main body portion as well as relative positions of the second insulating portion and the first electrode lead-out portion are limited, so that the second insulating portion can be stably located between the first electrode lead-out portion and the third wall portion as well as between the main body portion and the third wall portion, thereby insulating and isolating the first electrode lead-out portion and the third wall portion as well as insulating and isolating the main body portion and the third wall portion. On the other hand, it is conducive to increasing a connection area between the second insulating member and another component, thereby better fixing the second insulating member.

In an optional technical solution of this embodiment of the present application, along the thickness direction of the third wall portion, the main body portion includes a fourth surface facing the third wall portion, and the second insulating portion covers the entire fourth surface.

In this technical solution, by making the second insulating portion cover the entire fourth surface, the second insulating portion has a better insulating effect, further reducing the risk of short circuit in the battery cell, thereby helping to improve the reliability of the battery cell.

In an optional technical solution of this embodiment of the present application, the housing has a second wall portion. Along the first direction, the first wall portion and the second wall portion are opposite each other, and the third wall portion connects the first wall portion and the second wall portion. The second insulating member further includes a third insulating portion, the second insulating portion connects the first insulating portion and the third insulating portion, and along the first direction, at least a portion of the third insulating portion is provided between the main body portion and the second wall portion.

In this technical solution, at least a portion of the third insulating portion is provided between the main body portion and the second wall portion along the first direction to insulate and isolate the main body portion and the second wall portion. Since the material damage temperature of the second insulating member is higher, when thermal runaway occurs in another battery cell adjacent to the battery cell, the third insulating portion can still play a role in insulating and isolating the main body portion and the second wall portion to some extent, reducing the risk of short circuit caused by contact between the main body portion and the second wall portion. In this way, even if thermal runaway occurs in another battery cell adjacent to the battery cell, it is less likely to cause short circuit in the battery cell and thus avoids continuing to trigger thermal runaway, which is conducive to limiting heat diffusion and improving the reliability of the battery cell.

In an optional technical solution of this embodiment of the present application, the electrode assembly includes a second electrode lead-out portion, the first electrode lead-out portion and the second electrode lead-out portion are provided at the same end of the main body portion, and the second electrode lead-out portion has a polarity opposite to that of the first electrode lead-out portion. A long the first direction, a portion of the first insulating portion is provided between the second electrode lead-out portion and the first wall portion.

In this technical solution, a portion of the first insulating portion is provided between the first electrode lead-out portion and the first wall portion to insulate and isolate the first electrode lead-out portion and the first wall portion, and another portion of the first insulating portion is provided between the second electrode lead-out portion and the first wall portion to insulate and isolate the second electrode lead-out portion and the first wall portion. The first insulating portion can not only insulate and isolate the first electrode lead-out portion and the first wall portion but also insulate and isolate the second electrode lead-out portion and the first wall portion. As a single component, the first insulating portion achieves various functions, which is conducive to simplifying the structure of the battery cell.

In an optional technical solution of this embodiment of the present application, the electrode assembly includes a second electrode lead-out portion, the first electrode lead-out portion and the second electrode lead-out portion are provided at the same end of the main body portion, and the second electrode lead-out portion has a polarity opposite to that of the first electrode lead-out portion. The second insulating member further includes a fourth insulating portion, the second insulating portion connects the first insulating portion and the fourth insulating portion, and along the first direction, at least a portion of the fourth insulating portion is provided between the second electrode lead-out portion and the first wall portion.

In this technical solution, at least a portion of the fourth insulating portion is provided between the second electrode lead-out portion and the first wall portion along the first direction to insulate and isolate the second electrode lead-out portion and the first wall portion. Since the material damage temperature of the second insulating member is higher, when thermal runaway occurs in another battery cell adjacent to the battery cell, the fourth insulating portion can still play a role in insulating and isolating the second electrode lead-out portion and the first wall portion to some extent, reducing the risk of short circuit caused by contact between the second electrode lead-out portion and the first wall portion. In this way, even if thermal runaway occurs in another battery cell adjacent to the battery cell, it is less likely to cause short circuit in the battery cell and thus avoids continuing to trigger thermal runaway, which is conducive to limiting heat diffusion and improving the reliability of the battery cell.

In an optional technical solution of this embodiment of the present application, the first electrode lead-out portion and the second electrode lead-out portion are spaced apart along a third direction; and along the third direction, the first insulating portion and the fourth insulating portion are spaced apart.

In this technical solution, the first insulating portion is provided corresponding to the first electrode lead-out portion, and the fourth insulating portion is provided corresponding to the second electrode lead-out portion. The first insulating portion and the fourth insulating portion are spaced apart along the third direction. This is conducive to reducing respective sizes of the first insulating portion and the fourth insulating portion, reducing material consumption of the first insulating portion and the fourth insulating portion, and reducing the costs of the battery cell.

In an optional technical solution of this embodiment of the present application, along the first direction, the first insulating portion and the fourth insulating portion are partially stacked.

In this technical solution, by making the first insulating portion and the fourth insulating portion partially stacked, at least one of the first insulating portion and the fourth insulating portion covers, along the first direction, a portion of the main body portion located between the first electrode lead-out portion and the second electrode lead-out portion, reducing the risk of short circuit caused by contact between the main body portion and the first wall portion.

In an optional technical solution of this embodiment of the present application, the electrode assembly includes a second electrode lead-out portion, the first electrode lead-out portion and the second electrode lead-out portion are provided at the same end of the main body portion, and the second electrode lead-out portion has a polarity opposite to that of the first electrode lead-out portion. Along the first direction, a portion of the second insulating member is provided between the second electrode lead-out portion and the first wall portion.

In this technical solution, a portion of the second insulating member is provided between the first electrode lead-out portion and the first wall portion to insulate and isolate the first electrode lead-out portion and the first wall portion, and another portion of the second insulating member is provided between the second electrode lead-out portion and the first wall portion to insulate and isolate the second electrode lead-out portion and the first wall portion. The second insulating member can not only insulate and isolate the first electrode lead-out portion and the first wall portion but also insulate and isolate the second electrode lead-out portion and the first wall portion. As a single component, the second insulating member achieves various functions, which is conducive to simplifying the structure of the battery cell.

In an optional technical solution of this embodiment of the present application, the electrode assembly includes a second electrode lead-out portion, the first electrode lead-out portion and the second electrode lead-out portion are provided at the same end of the main body portion, and the second electrode lead-out portion has a polarity opposite to that of the first electrode lead-out portion. The first insulating member is further configured to insulate and isolate the second electrode lead-out portion and the first wall portion. The battery cell further includes a third insulating member. Along the first direction, at least a portion of the third insulating member is provided between the second electrode lead-out portion and the first wall portion. A material damage temperature of the third insulating member is higher than the material damage temperature of the first insulating member.

In this technical solution, at least a portion of the third insulating member is provided between the second electrode lead-out portion and the first wall portion along the first direction to insulate and isolate the second electrode lead-out portion and the first wall portion. Since the material damage temperature of the third insulating member is higher than the material damage temperature of the first insulating member, when thermal runaway occurring in another battery cell adjacent to the battery cell causes the first insulating member of the battery cell to be melted, the third insulating member can still play a role in insulating and isolating the second electrode lead-out portion and the first wall portion to some extent, reducing the risk of short circuit caused by contact between the second electrode lead-out portion and the first wall portion. In this way, even if thermal runaway occurs in another battery cell adjacent to the battery cell, it is less likely to cause short circuit in the battery cell and thus avoids continuing to trigger thermal runaway, which is conducive to limiting heat diffusion and improving the reliability of the battery cell.

In an optional technical solution of this embodiment of the present application, the first electrode lead-out portion and the second electrode lead-out portion are spaced apart along a third direction; and along the third direction, the second insulating member and the third insulating member are spaced apart.

In this technical solution, the second insulating member is provided corresponding to the first electrode lead-out portion, and the third insulating member is provided corresponding to the second electrode lead-out portion. The second insulating member and the third insulating member are spaced apart along the third direction, which is conducive to reducing respective sizes of the second insulating member and the third insulating member, reducing material consumption of the second insulating member and the third insulating member, and reducing the costs of the battery cell.

In an optional technical solution of this embodiment of the present application, along the first direction, the second insulating member and the third insulating member are partially stacked.

In this technical solution, by making the second insulating member and the third insulating member partially stacked, at least one of the second insulating member and the third insulating member covers, along the first direction, a portion of the main body portion located between the first electrode lead-out portion and the second electrode lead-out portion, reducing the risk of short circuit caused by contact between the main body portion and the first wall portion.

In an optional technical solution of this embodiment of the present application, the material damage temperature of the second insulating member is higher than or equal to 300°C.

In this technical solution, when thermal runaway occurs in another battery cell adjacent to the battery cell, the temperature inside the battery cell can rise to 200°C. However, the material damage temperature of the second insulating member is higher than or equal to 300°C. Therefore, when thermal runaway occurs in another battery cell adjacent to the battery cell, it is less likely to cause the second insulating member to be melted, so that the second insulating member can play an insulating and isolating role, reducing the risk of short circuit in the battery cell.

In an optional technical solution of this embodiment of the present application, a material of the second insulating member includes at least one of polyimide, polyether ether ketone, and polytetrafluoroethylene.

In this technical solution, polyimide, polyether ether ketone, and polytetrafluoroethylene have good high temperature resistance as well as good insulating effect, and can insulate and isolate the first electrode lead-out portion and the first wall portion at temperatures higher than 200°C, reducing the risk of short circuit in the battery cell, thereby improving the reliability of the battery cell.

In an optional technical solution of this embodiment of the present application, a positive electrode material of the battery cell includes lithium-containing phosphate.

In this technical solution, in a battery cell whose positive electrode material includes lithium-containing phosphate, a large amount of heat is generated during thermal runaway, which easily causes melting of the first insulating members of the battery cell and another battery cell adjacent thereto. The provision of the second insulating member in the battery cell is more conducive to reducing the risk of short circuit caused by contact between the first electrode lead-out portion and the first wall portion. To be specific, the effect of providing the second insulating member in the battery cell whose positive electrode material includes lithium-containing phosphate is better.

In an optional technical solution of this embodiment of the present application, the lithium-containing phosphate includes at least one of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon.

According to a second aspect, an embodiment of the present application further provides a battery, where the battery includes the battery cell described above.

According to a third aspect, an embodiment of the present application further provides an electric device, where the electric device includes the battery cell described above.

### BRIEF DESCRIPTION OF DRAWINGS

In order to more clearly illustrate the technical solutions of the embodiments of the present application, the drawings to be used in the embodiments are briefly introduced below. It should be understood that the following drawings only illustrate some embodiments of the present application and should not be regarded as limiting the scope. For those of ordinary skill in the art, other related drawings can be obtained based on these drawings without creative efforts.
FIG. 1 is a schematic structural diagram of a vehicle according to some embodiments of the present application;
FIG. 2 is an exploded view of a battery according to some embodiments of the present application;
FIG. 3 is a schematic structural diagram of a battery cell according to some embodiments of the present application;
FIG. 4 is an exploded view of a battery cell according to some embodiments of the present application;
FIG. 5 is a schematic structural diagram of a second insulating member connected to a first current collecting member according to some embodiments of the present application;
FIG. 6 is an exploded view of a second insulating member and a first current collecting member according to some embodiments of the present application;
FIG. 7 is a schematic structural diagram of a second insulating member connected to a first current collecting member according to some other embodiments of the present application;
FIG. 8 is an exploded view of a second insulating member and a first current collecting member provided according to some other embodiments of the present application;
FIG. 9 is a schematic top view of a battery cell according to some other embodiments of the present application;
FIG. 10 is a cross-sectional view at position A-A in FIG. 9;
FIG. 11 is a schematic structural diagram of a second insulating member connected to a first current collecting member according to some other embodiments of the present application;
FIG. 12 is an exploded view of a second insulating member and a first current collecting member according to some other embodiments of the present application;
FIG. 13 is an exploded view of a battery cell according to some other embodiments of the present application;
FIG. 14 is an exploded view of a battery cell according to some other embodiments of the present application;
FIG. 15 is a schematic structural diagram of a second insulating member connected to a first current collecting member according to some other embodiments of the present application;
FIG. 16 is an exploded view of a second insulating member and a first current collecting member according to some other embodiments of the present application;
FIG. 17 is a cross-sectional view of a battery cell according to some other embodiments of the present application;
FIG. 18 is a cross-sectional view of a battery cell according to some other embodiments of the present application;
FIG. 19 is a cross-sectional view of a battery cell according to some other embodiments of the present application;
FIG. 20 is an exploded view of a battery cell according to some other embodiments of the present application;
FIG. 21 is a schematic structural diagram of a second insulating member according to some other embodiments of the present application;
FIG. 22 is a cross-sectional view of a battery cell according to some other embodiments of the present application;
FIG. 23 is an exploded view of a battery cell according to some other embodiments of the present application;
FIG. 24 is a schematic structural diagram of a second insulating member according to some other embodiments of the present application;
FIG. 25 is an exploded view of a battery cell according to some other embodiments of the present application;
FIG. 26 is a schematic structural diagram of a second insulating member according to some other embodiments of the present application;
FIG. 27 is an exploded view of a battery cell according to some other embodiments of the present application;
FIG. 28 is a schematic structural diagram of a second insulating member according to some other embodiments of the present application; and
FIG. 29 is an exploded view of a battery cell according to some other embodiments of the present application.

Reference numerals: 10. box; 11. first portion; 12. second portion; 20. battery cell; 21. housing; 211. end cover; 212. housing body; 2122. second wall portion; 2123. third wall portion; 213. first wall portion; 22. electrode assembly; 221. main body portion; 2211. fourth surface; 222. first electrode lead-out portion; 2221. first tab; 2222. first current collecting member; 22221. body portion; 22222. protrusion portion; 2222a. first surface; 2222b. second surface; 2222c. third surface; 22223. first connecting portion; 22224. second connecting portion; 22225. covered region; 22226. uncovered region; 223. second electrode lead-out portion; 2231. second tab; 2232. second current collecting member; 23. first insulating member; 24. second insulating member; 241. avoidance hole; 242. first insulating portion; 243. second insulating portion; 244. third insulating portion; 245. fourth insulating portion; 25. first electrode terminal; 26. third insulating member; 27. second electrode terminal; 100. battery; 200. controller; 300. motor; and 1000. vehicle.

### DESCRIPTION OF EMBODIMENTS

In order to make the objectives, technical solutions, and advantages of the embodiments of the present application clearer, the technical solutions in the embodiments of the present application are clearly described below in conjunction with the drawings in the embodiments of the present application. Obviously, the described embodiments are some embodiments rather than all embodiments of the present application. Based on the embodiments in the present application, all other embodiments obtained by those of ordinary skill in the art without creative efforts fall within the scope of protection of the present application.

Unless otherwise defined, all technical and scientific terms used in the present application have the same meaning as commonly understood by those skilled in the technical field to which the present application belongs. The terms used in the specification of the present application are only for the purpose of describing specific embodiments and are not intended to limit the present application. The terms "include", "comprise", "have", and any variations thereof in the specification and claims of the present application and the above description of the drawings are intended to cover non-exclusive inclusion. The terms "first", "second", and the like in the specification and claims of the present application or the above drawings are used to distinguish different objects rather than to describe a specific order or a primary-secondary relationship.

The mention of "an embodiment" in the present application means that specific features, structures, or characteristics described in conjunction with this embodiment can be included in at least one embodiment of the present application. The appearance of the phrase at various places in the specification does not necessarily refer to the same embodiment, nor is it an independent or alternative embodiment that is mutually exclusive with other embodiments.

In the description of the present application, it should be noted that, unless otherwise clearly specified and limited, the terms "mounting", "connection", "join", and "attachment" should be understood in a broad sense. For example, it may be a fixed connection, a detachable connection, or an integral connection; it may be a direct connection or an indirect connection through an intermediate medium; and it may be an internal communication between two components. For those of ordinary skill in the art, the specific meanings of the above terms in the present application can be understood according to specific circumstances.

The term "and/or" in the present application is merely an association relationship describing associated objects, indicating that three relationships may exist. For example, A and/or B may indicate the following three cases: only A exists, both A and B exist, and only B exists. In addition, the character "/" in the present application generally indicates that the contextually associated objects are in an "or" relationship.

In the embodiments of the present application, the same reference numerals indicate the same components, and for brevity, detailed descriptions of the same components in different embodiments are omitted. It should be understood that the thicknesses, lengths and widths of various components in the embodiments of the present application shown in the drawings, as well as the overall thickness, length and width of the integrated apparatus, are only exemplary and should not constitute any limitation on the present application.

"A plurality of" appearing in the present application means more than two (including two).

In the embodiments of the present application, the battery cell may be a secondary battery, and the secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like, which is not limited in the embodiments of the present application.

A battery cell generally includes an electrode assembly. The electrode assembly includes a positive electrode, a negative electrode, and a separator. During a charging and discharging process of the battery cell, active ions (such as lithium ions) are intercalated and deintercalated between the positive electrode and the negative electrode. The separator is provided between the positive electrode and the negative electrode to prevent short circuit between the positive and negative electrodes while allowing active ions to pass through.

In some embodiments, the positive electrode may be a positive electrode sheet, and the positive electrode sheet may include a positive electrode current collector and a positive electrode active material provided on at least one surface of the positive electrode current collector.

In an example, the positive electrode current collector has two opposite surfaces in its thickness direction, and the positive electrode active material is provided on either or both of the two opposite surfaces of the positive electrode current collector.

In an example, the positive electrode current collector may be a metal foil or a composite current collector. For example, for a metal foil, aluminum with a silver-plated surface, stainless steel with a silver-plated surface, stainless steel, copper, aluminum, nickel, carbon electrode, carbon, nickel, titanium, or the like may be used. The composite current collector may include a polymer material substrate and a metal layer. The composite current collector may be formed by forming a metal material (aluminum, aluminum alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

In an example, the positive electrode active material may include at least one of the following materials: lithium-containing phosphate, lithium transition metal oxide, and respective modified compounds thereof. However, the present application is not limited to these materials, and other conventional materials that can be used as positive electrode active materials for batteries may alternatively be used. These positive electrode active materials can be used alone, or more than two thereof are used in combination. Examples of lithium-containing phosphate may include but are not limited to at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of lithium transition metal oxides may include but are not limited to at least one of lithium cobalt oxide (such as LiCoO₂), lithium nickel oxide (such as LiNiO₂), lithium manganese oxide (such as LiMnO₂ or LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), lithium nickel cobalt aluminum oxide (such as LiNi_{0.85}Co_{0.15}Al_{0.05}O₂)), and modified compounds thereof.

In some embodiments, the positive electrode may adopt foam metal. The foam metal may be foam nickel, foam copper, foam aluminum, foam alloy, or the like. When foam metal is used as the positive electrode, the surface of the foam metal may be provided with no positive electrode active material and certainly may be provided with a positive electrode active material. In an example, a lithium source material, potassium metal, or sodium metal may fill the foam metal and/or be deposited in the foam metal, and the lithium source material is lithium metal and/or a lithium-rich material.

In some embodiments, the negative electrode may be a negative electrode sheet, and the negative electrode sheet may include a negative electrode current collector.

In an example, the negative electrode current collector may be a metal foil, foam metal, or a composite current collector. For example, for a metal foil, aluminum with a silver-plated surface, stainless steel with a silver-plated surface, stainless steel, copper, aluminum, nickel, carbon electrode, nickel, titanium, or the like may be used. The foam metal may be foam nickel, foam copper, foam aluminum, foam alloy, or the like. The composite current collector may include a polymer material substrate and a metal layer. The composite current collector may be formed by forming a metal material (copper, copper alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

In an example, the negative electrode sheet may include a negative electrode current collector and a negative electrode active material provided on at least one surface of the negative electrode current collector.

In an example, the negative electrode current collector has two opposite surfaces in its thickness direction, and the negative electrode active material is provided on either or both of the two opposite surfaces of the negative electrode current collector.

In an example, the negative electrode active material may adopt a negative electrode active material for battery cells well known in the art. In an example, the negative electrode active material may include at least one of the following materials: artificial graphite, natural graphite, soft carbon, hard carbon, a silicon-based material, a tin-based material, and lithium titanate. The silicon-based material may be at least one selected from elemental silicon, a silicon oxide compound, a silicon-carbon composite, a silicon-nitrogen composite, and silicon alloy. The tin-based material may be at least one selected from elemental tin, a tin oxide compound, and tin alloy. However, the present application is not limited to these materials, and other conventional materials that can be used as negative electrode active materials for batteries may alternatively be used. These negative electrode active materials may be used alone, or more than two thereof are used in combination.

In some embodiments, the positive electrode current collector may be made of aluminum, and the negative electrode current collector may be made of copper.

In some embodiments, the electrode assembly further includes a separator provided between the positive electrode and the negative electrode.

In some embodiments, the separator is a separator film. Various types of separator films may be used, and any well-known porous separator film with good chemical stability and mechanical stability may be selected.

In an example, a material of the separator film may include at least one of glass fiber, non-woven fabric, polyethylene, polypropylene, and polyvinylidene fluoride. The separator film may be a single-layer film or a multi-layer composite film. When the separator film is a multi-layer composite film, materials of the layers may be the same or different. The separator can be an independent component located between the positive and negative electrodes or attached to surfaces of the positive and negative electrodes.

In some embodiments, the separator is a solid electrolyte. The solid electrolyte is provided between the positive electrode and the negative electrode, and plays both the roles of transmitting ions and isolating the positive and negative electrodes.

In some embodiments, the battery cell further includes an electrolyte, and the electrolyte plays a role of conducting ions between the positive and negative electrodes. The electrolyte may be liquid, gel, or solid, where a liquid electrolyte includes an electrolytic salt and a solvent.

In some embodiments, the electrolytic salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may include at least one of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may alternatively be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

A gel electrolyte includes a polymer as a skeleton network of the electrolyte, paired with an ionic liquid-lithium salt.

A solid electrolyte includes a polymer solid electrolyte, an inorganic solid electrolyte, and a composite solid electrolyte.

In an example, the polymer solid electrolyte may be polyether (polyethylene oxide), polysiloxane, polycarbonate, polyacrylonitrile, polyvinylidene fluoride, polymethyl methacrylate, a single-ion polymer, a polyionic liquid-lithium salt, cellulose, or the like.

In an example, the inorganic solid electrolyte may include one or more of an oxide solid electrolyte (crystalline perovskite, a sodium superconducting ionic conductor, garnet, or an amorphous LiPON film), a sulfide solid electrolyte (a crystalline lithium superionic conductor (lithium germanium phosphorus sulfur or sulfur silver germanium ore), or amorphous sulfide), a halide solid electrolyte, a nitride solid electrolyte, and a hydride solid electrolyte.

In an example, the composite solid electrolyte is formed by adding an inorganic solid electrolyte filler to a polymer solid electrolyte.

In some embodiments, the electrode assembly is a wound structure. The positive electrode sheet and the negative electrode sheet are wound into a wound structure.

In some embodiments, the electrode assembly is a stacked structure.

In an example, a plurality of positive electrode sheets and a plurality of negative electrode sheets may be provided respectively, and the plurality of positive electrode sheets and the plurality of negative electrode sheets are alternately stacked.

In an example, a plurality of positive electrode sheets may be provided, and the negative electrode sheet is folded to form a plurality of folded sections that are stacked, with one positive electrode sheet sandwiched between adjacent folded sections.

In an example, both the positive electrode sheet and the negative electrode sheet are folded to form a plurality of folded sections that are stacked.

In an example, a plurality of separators may be provided, which are each provided between any adjacent positive electrode sheets or negative electrode sheets.

In an example, the separator may be continuously provided between any adjacent positive electrode sheets or negative electrode sheets by folding or winding.

In some embodiments, the electrode assembly may be in a cylindrical shape, a flat shape, a multi-prism shape, or another shape.

In some embodiments, the electrode assembly is provided with tabs, and the tabs may lead out current from the electrode assembly. The tabs include a positive tab and a negative tab.

In some embodiments, the battery cell may include a housing. The housing is configured to encapsulate components such as the electrode assembly and the electrolyte. The housing may be a steel housing, an aluminum housing, a plastic housing (such as polypropylene), a composite metal housing (such as a copper-aluminum composite housing), an aluminum-plastic film, or the like.

In an example, the battery cell may be a cylindrical battery cell, a prismatic battery cell, a pouch battery cell, or a battery cell in another shape. The prismatic battery cell includes but is not limited to a square-shell battery cell, a blade-shaped battery cell, a multi-prism battery, where the multi-prism battery is, for example, a hexagonal prism battery.

The battery mentioned in the embodiments of the present application refers to a single physical module that includes one or more battery cells to provide higher voltage and capacity.

In some embodiments, the battery may be a battery module. When there are a plurality of battery cells, the plurality of battery cells are arranged and fixed to form one battery module.

In some embodiments, the battery may be a battery pack, and the battery pack includes a box and a battery cell, where the battery cell or battery module is accommodated in the box body.

In some embodiments, the box may serve as a portion of a chassis structure of a vehicle. For example, a portion of the box may be at least a portion of a floor of the vehicle, or a portion of the box may be at least a portion of cross beams and longitudinal beams of the vehicle.

In some embodiments, the battery may be an energy storage apparatus. The energy storage apparatus includes an energy storage container, an energy storage cabinet, and the like.

At present, from the development of the market situation, the application of batteries is becoming more and more widespread. Batteries are not only used in energy storage power systems such as hydroelectric, thermal, wind, and solar power stations, but also widely used in electric bicycles, electric motorcycles, electric vehicles, and other electric transportation tools, as well as military equipment, aerospace, and many other fields. With the continuous expansion of battery application fields, the market demand thereof is also constantly increasing.

The development of battery technology requires consideration about various design factors, for example, performance parameters such as battery life, energy density, discharge capacity, and charge-discharge rate. In addition, the reliability of the battery also needs to be considered. However, current batteries are poor in reliability.

A battery generally includes a plurality of battery cells to provide higher voltage and capacity. In the battery, if thermal runaway occurs in one battery cell, heat generated by the thermal runaway is easily transmitted to an adjacent battery cell, so that a temperature of the adjacent battery cell can reach 200°C. However, lower plastic of the battery cell (an insulating member configured to insulate and isolate an end cover and an electrode assembly) is melted at 160°C to 180°C, so that the end cover and the electrode assembly is likely to come into direct contact with each other to cause short circuit, further increasing the temperature of the battery cell, thereby ultimately leading to heat diffusion and poor reliability of the battery.

In view of this, an embodiment of the present application provides a battery cell. The battery cell includes a housing, an electrode assembly, a first insulating member, and a second insulating member. The housing has a first wall portion, and the electrode assembly is accommodated in the housing. The electrode assembly includes a first electrode lead-out portion and a main body portion, and the first electrode lead-out portion is provided at an end of the main body portion facing the first wall portion along a first direction. Along the first direction, the first insulating member is provided on a surface of the first wall portion facing the electrode assembly, and the first insulating member is configured to insulate and isolate the first electrode lead-out portion and the first wall portion. Along the first direction, at least a portion of the second insulating member is provided between the first electrode lead-out portion and the first wall portion, a material damage temperature of the second insulating member is higher than a material damage temperature of the first insulating member, and the second insulating member is configured to insulate and isolate the first electrode lead-out portion and the first wall portion when the first insulating member is melted.

The battery cell is provided with the first insulating member and the second insulating member. During normal use, both the first insulating member and the second insulating member can insulate and isolate the first electrode lead-out portion and the first wall portion, reducing the risk of short circuit caused by contact between the first electrode lead-out portion and the first wall portion. Since the material damage temperature of the second insulating member is higher than the material damage temperature of the first insulating member, when thermal runaway occurring in another battery cell adjacent to the battery cell causes the first insulating member of the battery cell to be melted, the second insulating member can still play a role in insulating and isolating the first electrode lead-out portion and the first wall portion to some extent, reducing the risk of short circuit caused by contact between the first electrode lead-out portion and the first wall portion. In this way, even if thermal runaway occurs in another battery cell adjacent to the battery cell, it is less likely to cause short circuit in the battery cell and thus avoids continuing to trigger thermal runaway, which is conducive to limiting heat diffusion and improving the reliability of the battery cell.

The technical solution described in this embodiment of the present application is applicable to batteries and electric devices using batteries.

The electric device may be a vehicle, a mobile phone, a portable device, a notebook computer, a ship, a spacecraft, an electric toy, an electric tool, or the like. The spacecraft includes airplanes, rockets, space shuttles, spaceships, and the like; the electric toys include fixed or mobile electric toys, such as game consoles, electric toy cars, electric toy ships, and electric toy airplanes; and the electric tools include electric metal cutting tools, electric grinding tools, electric assembly tools, and electric railway tools, such as electric drills, electric grinders, electric wrenches, electric screwdrivers, electric hammers, impact drills, concrete vibrators, and electric planers. The foregoing electric device is not particularly limited in the embodiments of the present application.

For ease of description, the electric device being a vehicle 1000 is used an example for description in the following embodiments.

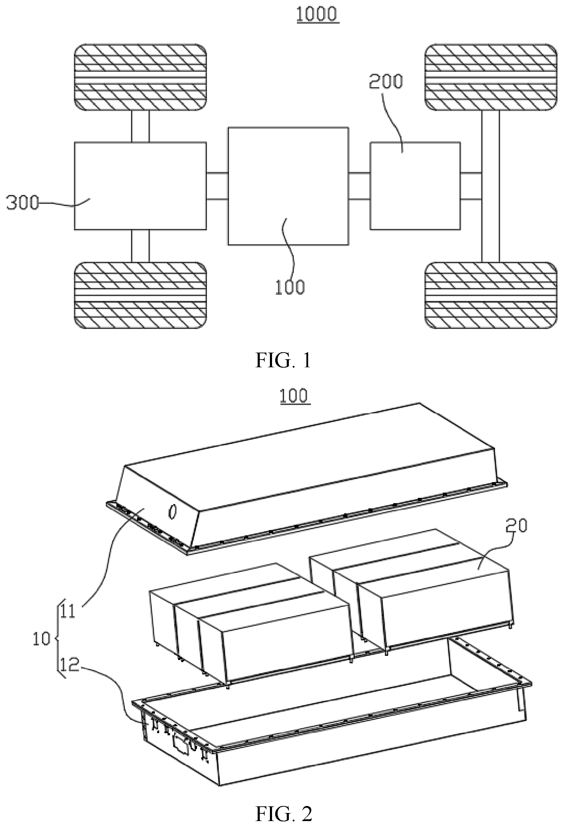

Reference is made to FIG. 1. FIG. 1 is a schematic structural diagram of a vehicle 1000 according to some embodiments of the present application. The vehicle 1000 may be a fuel vehicle, a gas vehicle, or a new energy vehicle, where the new energy vehicle may be a battery electric vehicle, a hybrid electric vehicle, an extended-range vehicle, or the like. A battery 100 is provided inside the vehicle 1000, and the battery 100 may be provided at the bottom, front, or rear of the vehicle 1000. The battery 100 may be used for power supply of the vehicle 1000, for example, the battery 100 can serve as an operating power source of the vehicle 1000. The vehicle 1000 may further include a controller 200 and a motor 300. The controller 200 is configured to control the battery 100 to supply power to the motor 300, for example, for the operating power needs during starting, navigation, and driving of the vehicle 1000.

In some embodiments of the present application, the battery 100 can not only serve as an operating power source of the vehicle 1000, but also serve as a driving power source of the vehicle 1000, replacing or partially replacing fuel or natural gas to provide driving power for the vehicle 1000.

Reference is made to FIG. 2. FIG. 2 is an exploded view of a battery 100 according to some embodiments of the present application. The battery 100 includes a box 10 and a battery cell 20, where the battery cell 20 is accommodated in the box 10. The box 10 is configured to provide an accommodation space for the battery cell 20, and the box 10 can adopt a plurality of structures. In some embodiments, the box 10 may include a first portion 11 and a second portion 12, the first portion 11 and the second portion 12 cover each other, and the first portion 11 and the second portion 12 jointly define an accommodation space for accommodating the battery cell 20. The second portion 12 may be a hollow structure with one end open, the first portion 11 may be a plate-shaped structure, and the first portion 11 covers the open side of the second portion 12, so that the first portion 11 and the second portion 12 jointly define the accommodation space. The first portion 11 and the second portion 12 may each alternatively be a hollow structure with one side open, and the open side of the first portion 11 covers the open side of the second portion 12. Certainly, the box 10 formed by the first portion 11 and the second portion 12 may be in various shapes, such as a shape of a cylinder or a shape of a rectangular body.

In the battery 100, a plurality of battery cells 20 may be provided, and the plurality of battery cells 20 may be connected in series, in parallel, or in series-parallel, where being connected in series-parallel refers to a combination of a series connection and a parallel connection of the plurality of battery cells 20. The plurality of battery cells 20 may be directly connected in series, in parallel, or in series-parallel, and then an entirety formed by the plurality of battery cells 20 is accommodated in the box 10. Certainly, the battery 100 may alternatively be formed in a manner that a plurality of battery cells 20 are first connected in series, in parallel, or in series-parallel to form a battery module, and then a plurality of battery modules are connected in series, in parallel, or in series-parallel to form an entirety that is accommodated in the box 10. The battery 100 may further include other structures, for example, the battery 100 may further include a busbar component for realizing electrical connection between a plurality of battery cells 20.

Each battery cell 20 may be a secondary battery cell or a primary battery cell, or may be a lithium-sulfur battery cell, a sodium-ion battery cell, or a magnesium-ion battery cell, but is not limited thereto. The battery cell 20 may be in the shape of a cylinder, the shape of a flat body, the shape of a rectangular body, or another shape.

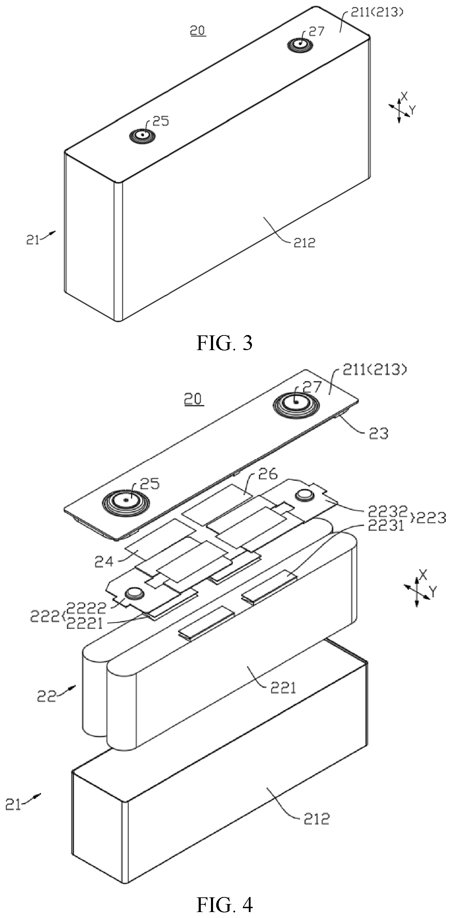

Reference is made to FIG. 3 and FIG. 4. FIG. 3 is a schematic structural diagram of a battery cell 20 according to some embodiments of the present application. FIG. 4 is an exploded view of a battery cell 20 according to some embodiments of the present application. These embodiments of the present application provide a battery cell 20. The battery cell 20 includes a housing 21, an electrode assembly 22, a first insulating member 23, and a second insulating member 24. The housing 21 has a first wall portion 213, and the electrode assembly 22 is accommodated in the housing 21. The electrode assembly 22 includes a first electrode lead-out portion 222 and a main body portion 221, and the first electrode lead-out portion 222 is provided at an end of the main body portion 221 facing the first wall portion 213 along a first direction. Along the first direction, the first insulating member 23 is provided on a surface of the first wall portion 213 facing the electrode assembly 22, and the first insulating member 23 is configured to insulate and isolate the first electrode lead-out portion 222 and the first wall portion 213. Along the first direction, at least a portion of the second insulating member 24 is provided between the first electrode lead-out portion 222 and the first wall portion 213, a material damage temperature of the second insulating member 24 is higher than a material damage temperature of the first insulating member 23, and the second insulating member 24 is configured to insulate and isolate the first electrode lead-out portion 222 and the first wall portion 213 when the first insulating member 23 is melted.

The battery cell 20 refers to the smallest unit constituting the battery 100.

The housing 21 includes an end cover 211 and a housing body 212. The housing body 212 has an accommodation space with one end open, and the accommodation space is configured to accommodate the electrode assembly 22. The end cover 211 is connected to the housing body 212 and seals the opening.

The end cover 211 refers to a component that covers the opening of the housing body 212 to isolate the internal environment of the battery cell 20 from the external environment. Without limitation, the end cover 211 may be adapted to the housing body 212 in shape so as to fit with the housing body 212. Optionally, the end cover 211 may be made of a material with specific hardness and strength (such as aluminum alloy), so that the end cover 211 is less likely to deform when being squeezed or collided, enabling the battery cell 20 to have higher structural strength and improved safety performance. The end cover 211 may alternatively be made of various materials, such as copper, iron, aluminum, stainless steel, aluminum alloy, and plastic. This is not particularly limited in the embodiments of the present application.

The housing body 212 is a component configured to fit with the end cover 211 to form the internal environment of the battery cell 20, where the formed internal environment may be used to accommodate the electrode assembly 22, an electrolyte solution, and other components. The housing body 212 and the end cover 211 may be independent components, an opening may be provided on the housing body 212, and the end cover 211 covers the opening to form the internal environment of the battery cell 20. Without limitation, the end cover 211 and the housing body 212 may alternatively be integrated. Specifically, the end cover 211 and the housing body 212 may first form a shared joint surface before other components are put into the housing, and when it is necessary to seal the interior of the housing body 212, the end cover 211 covers the housing body 212. The housing body 212 may have various shapes and sizes, such as a rectangular shape, a cylindrical shape, and a hexagonal prism shape. Specifically, the shape of the housing body 212 may be determined according to a specific shape and size of the electrode assembly 22. The housing body 212 may be made of various materials, such as copper, iron, aluminum, stainless steel, aluminum alloy, and plastic. This is not particularly limited in the embodiments of the present application.

The electrode assembly 22 is a component in the battery cell 20 where electrochemical reactions take place. The housing 21 may contain one or more electrode assemblies 22 inside. The electrode assembly 22 is mainly formed by winding or stacking a positive electrode sheet and a negative electrode sheet, and a separator film is usually provided between the positive electrode sheet and the negative electrode sheet. Portions of the positive electrode sheet and the negative electrode sheet having active materials constitute the main body portion 221 of the electrode assembly 22, and portions of the positive electrode sheet and the negative electrode sheet without active materials each constitute a tab. A positive tab and a negative tab may be located at one end of a main body or are respectively located at two ends of the main body portion 221. During a charging and discharging process of the battery 100, a positive electrode active material and a negative electrode active material react with the electrolyte solution.

The first wall portion 213 may be the end cover 211 of the housing 21 or a wall of the housing body 212 of the housing 21. In some embodiments, in FIG. 3 and FIG. 4, the first wall portion 213 is the end cover 211. In some other embodiments, the first wall portion 213 may be a bottom wall of the housing body 212 facing the end cover 211. In some other embodiments, the first wall portion 213 may alternatively be a side wall of the housing body 212 adjacent to and connected to the end cover 211.

The first electrode lead-out portion 222 is a structure configured to lead out electrical energy from the main body portion 221 or introduce the electrical energy into the main body portion 221. The first electrode lead-out portion 222 includes at least the above-mentioned positive tab or negative tab, and the first electrode lead-out portion 222 may further include other electrical connection components connected to the positive tab or negative tab. The first electrode lead-out portion 222 is provided at an end of the main body portion 221 facing the first wall portion 213 along the first direction. In other words, the first electrode lead-out portion 222 is located between the first wall portion 213 and the main body portion 221 along the first direction.

Reference is made to FIG. 3 and FIG. 4, where the first direction may be a direction X shown in the figure.

The first insulating member 23 is commonly known as lower plastic. The first insulating member 23 is provided on an inner side of the first wall portion 213, and the first insulating member 23 is configured to isolate the first electrode lead-out portion 222 and the first wall portion 213 to reduce the risk of short circuit. Exemplarily, the insulating member may be plastic, rubber, or the like.

The second insulating member 24 is partially or entirely provided between the first electrode lead-out portion 222 and the first wall portion 213 along the first direction to insulate and isolate the first electrode lead-out portion 222 and the first wall portion 213. During normal use of the battery cell 20, both the first insulating member 23 and the second insulating member 24 can play a role in insulating and isolating the first electrode lead-out portion 222 and the first wall portion 213.

A material damage temperature of a substance may be a melting point of this substance or a decomposition temperature of this substance. When a substance undergoes a decomposition reaction at a specific temperature, that temperature is the decomposition temperature of this substance. If a substance has both a melting point and a decomposition temperature, the decomposition temperature is the material damage temperature of this substance. If a substance has only a melting point but no decomposition temperature, the melting point is the material damage temperature of this substance. If a substance has only a decomposition temperature but no melting point, the decomposition temperature is the material damage temperature of this substance.

A material damage temperature of the second insulating member 24 is higher than a material damage temperature of the first insulating member 23. When thermal runaway occurs in the battery cell 20, the first insulating member 23 first reaches the material damage temperature and is melted, and the second insulating member 24 can still insulate and isolate the first electrode lead-out portion 222 and the first wall portion 213 when the first insulating member 23 is melted, reducing the risk of short circuit caused by contact between the first electrode lead-out portion 222 and the first wall portion 213.

The battery cell 20 is provided with the first insulating member 23 and the second insulating member 24. During normal use, both the first insulating member 23 and the second insulating member 24 can insulate and isolate the first electrode lead-out portion 222 and the first wall portion 213, reducing the risk of short circuit caused by contact between the first electrode lead-out portion 222 and the first wall portion 213. Since the material damage temperature of the second insulating member 24 is higher than the material damage temperature of the first insulating member 23, when thermal runaway occurring in another battery cell 20 adjacent to the battery cell 20 causes the first insulating member 23 of the battery cell 20 to be melted, the second insulating member 24 can still play a role in insulating and isolating the first electrode lead-out portion 222 and the first wall portion 213 to some extent, reducing the risk of short circuit caused by contact between the first electrode lead-out portion 222 and the first wall portion 213. In this way, even if thermal runaway occurs in another battery cell 20 adjacent to the battery cell 20, it is less likely to cause short circuit in the battery cell 20 and thus avoids continuing to trigger thermal runaway, which is conducive to limiting heat diffusion and improving the reliability of the battery cell 20.

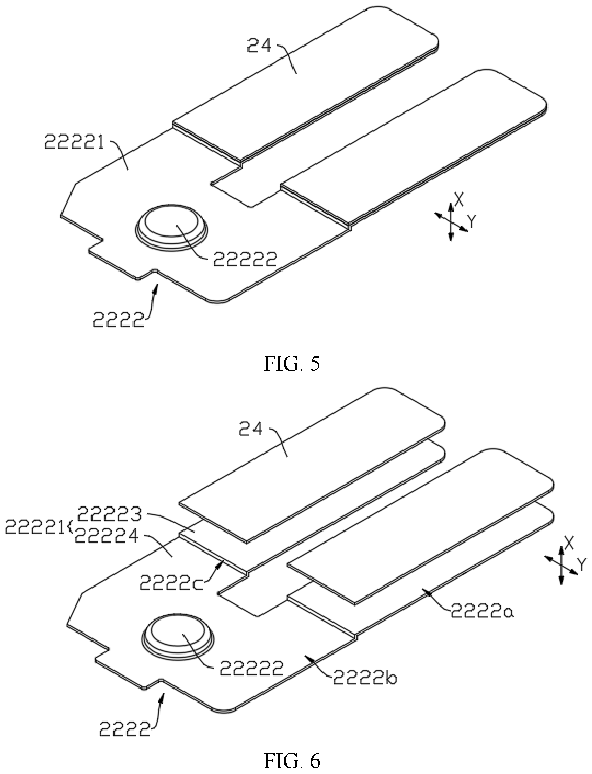

Reference is made to FIG. 3, FIG. 4, FIG. 5, and FIG. 6. FIG. 5 is a schematic structural diagram of a second insulating member 24 connected to a first current collecting member 2222 according to some embodiments of the present application. FIG. 6 is an exploded view of a second insulating member 24 and a first current collecting member 2222 according to some embodiments of the present application. In some embodiments, the second insulating member 24 is connected to the first electrode lead-out portion 222.

The second insulating member 24 is directly connected to the first electrode lead-out portion 222. The second insulating member 24 may be fixedly connected to the first electrode lead-out portion 222, for example, the second insulating member 24 is adhered to the first electrode lead-out portion 222. The second insulating member 24 may alternatively be detachably connected to the first electrode lead-out portion 222, for example, the second insulating member 24 is in snap fit with the first electrode lead-out portion 222.

By connecting the second insulating member 24 to the first electrode lead-out portion 222, on one hand, since the first insulating member 23 is provided on the surface of the first wall portion 213 facing the electrode assembly 22, the second insulating member 24 is connected to the first electrode lead-out portion 222 more conveniently and is less likely to interfere with the first insulating member 23; and on the other hand, the connection of the second insulating member 24 to the first electrode lead-out portion 222 limits relative positions of the second insulating member 24 and the first electrode lead-out portion 222, so that the second insulating member 24 can be stably located between the first electrode lead-out portion 222 and the first wall portion 213, thereby insulating and isolating the first electrode lead-out portion 222 and the first wall portion 213.

Reference is made to FIG. 3, FIG. 4, FIG. 5, and FIG. 6. In some embodiments, the battery cell 20 includes a first electrode terminal 25, and the first electrode terminal 25 is provided on the first wall portion 213. The first electrode lead-out portion 222 includes a first tab 2221 and a first current collecting member 2222, the first tab 2221 is connected to an end of the main body portion 221 facing the first wall portion 213 along the first direction, and the first current collecting member 2222 connects the first electrode terminal 25 and the first tab 2221. The second insulating member 24 is connected to the first current collecting member 2222, and along the first direction, at least a portion of the second insulating member 24 is located between the first current collecting member 2222 and the first wall portion 213.

The first electrode terminal 25 is configured to be electrically connected to the first electrode lead-out portion 222 to input or output electrical energy of the battery cell 20.

The first electrode lead-out portion 222 includes a first tab 2221 and a first current collecting member 2222, where the first tab 2221 is a positive tab or a negative tab, and the first current collecting member 2222 connects the first tab 2221 and the first electrode terminal 25 to guide the electrical energy of the electrode assembly 22 to the first electrode terminal 25 or receive the electrical energy inputted from the first electrode terminal 25.

Optionally, the first current collecting member 2222 may be a sheet-like structure, such as an adapter sheet.

The second insulating member 24 is connected to the first current collecting member 2222, and the second insulating member 24 is partially or entirely located between the first current collecting member 2222 and the first wall portion 213 along the first direction to insulate and isolate the first current collecting member 2222 and the first wall portion 213.

The first tab 2221 is connected to the first electrode terminal 25 through the first current collecting member 2222. The first current collecting member 2222 is more likely to come into contact with the first wall portion 213 to cause a short circuit as compared to the first tab 2221. Therefore, by connecting the second insulating member 24 to the first current collecting member 2222 and making at least a portion of the second insulating member 24 located between the first current collecting member 2222 and the first wall portion 213, the first current collecting member 2222 and the first wall portion 213 are insulated and isolated, so that the second insulating member 24 has a better insulating effect, further reducing the risk of short circuit in the battery cell 20, thereby helping to improve the reliability of the battery cell 20.

Reference is made to FIG. 5 and FIG. 6. In some embodiments, the first current collecting member 2222 includes a body portion 22221 and a protrusion portion 22222, the protrusion portion 22222 protrudes from the body portion 22221 along the first direction, the body portion 22221 is connected to the first tab 2221, and the protrusion portion 22222 is connected to the first electrode terminal 25. Along the first direction, the body portion 22221 has a first surface 2222a closest to the first wall portion 213, and the second insulating member 24 covers at least a portion of the first surface 2222a.

The body portion 22221 is a portion of the first current collecting member 2222 that is mainly configured to be connected to the first tab 2221. The protrusion portion 22222 is a portion of the first current collecting member 2222 that is mainly configured to be connected to the first electrode terminal 25. The protrusion portion 22222 is connected to the body portion 22221, and the protrusion portion 22222 protrudes from the body portion 22221 along the first direction.

Since the protrusion portion 22222 is the portion connected to the first electrode terminal 25, even if the first insulating member 23 is melted, the protrusion portion 22222 is less likely to come into contact with the first wall portion 213 to cause a short circuit between the first electrode lead-out portion 222 and the first wall portion 213. Compared to the protrusion portion 22222, the body portion 22221 is more likely to come into contact with the first wall portion 213 to cause a short circuit between the first electrode lead-out portion 222 and the first wall portion 213 when the first insulating member 23 is melted.

The first surface 2222a is a surface of the body portion 22221 closest to the first wall portion 213 along the first direction, and is also a surface of the body portion 22221 that is most likely to come into contact with the first wall portion 213 to cause a short circuit. The second insulating member 24 may cover a portion of the first surface 2222a, and the second insulating member 24 may alternatively cover the entire first surface 2222a, thereby reducing the risk of short circuit caused by contact between the first surface 2222a and the first wall portion 213.

The first surface 2222a is the surface of the body portion 22221 closest to the first wall portion 213. To be specific, the first surface 2222a is a surface on the first current collecting member 2222 that is most likely to come into contact with the first wall portion 213 to cause a short circuit. By making the second insulating member 24 cover at least a portion of the first surface 2222a, the first current collecting member 2222 and the first wall portion 213 are insulated and isolated, so that the second insulating member 24 has a better insulating effect, which is conducive to reducing the risk of short circuit in the battery cell 20, thereby improving the reliability of the battery cell 20.

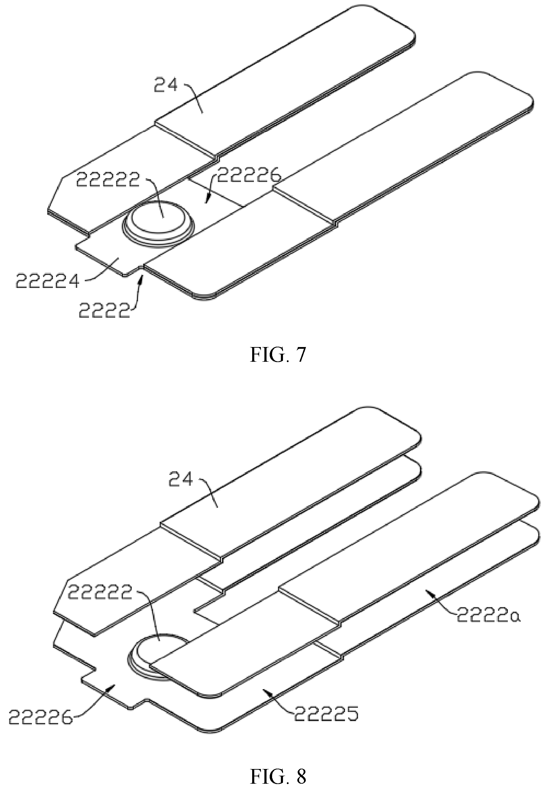

Reference is made to FIG. 5, FIG. 6, FIG. 7, and FIG. 8. FIG. 7 is a schematic structural diagram of a second insulating member 24 connected to a first current collecting member 2222 according to some other embodiments of the present application. FIG. 8 is an exploded view of a second insulating member 24 and a first current collecting member 2222 according to some other embodiments of the present application. In some other embodiments, along the first direction, the body portion 22221 includes a first connecting portion 22223 and a second connecting portion 22224, the second connecting portion 22224 is connected to the first connecting portion 22223, and the first tab 2221 is connected to the first connecting portion 22223. Along the first direction, a surface of the first connecting portion 22223 facing the first wall portion 213 is the first surface 2222a, the second connecting portion 22224 has a second surface 2222b facing the first wall portion 213, and the first surface 2222a is closer to the first wall portion 213 than the second surface 2222b. The protrusion portion 22222 protrudes from the second surface 2222b, and the second insulating member 24 covers at least a portion of the second surface 2222b.

The first connecting portion 22223 is a portion of the body portion 22221 that is mainly configured to be connected to the first tab 2221. The first connecting portion 22223 is connected to the second connecting portion 22224, and the protrusion portion 22222 is provided on the second connecting portion 22224 to facilitate connection with the first electrode terminal 25 and reduce the difficulty in connection between the first electrode terminal 25 and the first tab 2221.

The surface of the first connecting portion 22223 facing the first wall portion 213 along the first direction is the first surface 2222a, that is, the surface of the first connecting portion 22223 facing the first wall portion 213 along the first direction is a surface of the body portion 22221 closest to the first wall portion 213.

The second surface 2222b is a surface of the second connecting portion 22224 facing the first wall portion 213. Along the first direction, there is a height difference between the first surface 2222a and the second surface 2222b, and the first surface 2222a is closer to the first wall portion 213 than the second surface 2222b. In other words, along the first direction, a distance between the second surface 2222b and the first wall portion 213 is greater than a distance between the first surface 2222a and the first wall portion 213.

Along the first direction, the protrusion portion 22222 protrudes from the second surface 2222b. The second insulating member 24 may cover only a portion of the second surface 2222b, and the second insulating member 24 may alternatively cover the entire second surface 2222b to reduce the risk of short circuit caused by contact between the second surface 2222b and the first wall portion 213.

The body portion 22221 includes the first surface 2222a and the second surface 2222b, where the first surface 2222a is a surface closest to the first wall portion 213, and a distance between the second surface 2222b and the first wall portion 213 is greater than a distance between the first surface 2222a and the first wall portion 213. Since both the first surface 2222a and the second surface 2222b have the risk of coming into contact with the first wall portion 213 to cause a short circuit, by making the second insulating member 24 cover at least a portion of the first surface 2222a and at least a portion of the second surface 2222b, the first current collecting member 2222 and the first wall portion 213 are better insulated and isolated, so that the second insulating member 24 has a better insulating effect, which is conducive to further reducing the risk of short circuit in the battery cell 20, thereby helping to further improve the reliability of the battery cell 20.

Optionally, in some embodiments, the body portion 22221 further includes a third surface 2222c connecting the first surface 2222a and the second surface 2222b, and the second insulating member 24 at least partially covers the third surface 2222c. For example, the second insulating member 24 may be attached to third surface 2222c and cover the third surface 2222c.

Reference is made to FIG. 4, FIG. 5, FIG. 6, FIG. 7, and FIG. 8. In some embodiments, the battery cell 20 includes a plurality of electrode assemblies 22, the plurality of electrode assemblies 22 are arranged along a second direction, and the second direction intersects the first direction. The second surface 2222b includes a covered region 22225 covered by the second insulating member 24 and an uncovered region 22226 not covered by the second insulating member 24. Along the second direction, two sides of the uncovered region 22226 are both connected to the covered region 22225, and the protrusion portion 22222 is provided on the uncovered region 22226.

The second direction is an arrangement direction of the plurality of electrode assemblies 22. Reference is made to FIG. 4, where the second direction may be a direction Y shown in the figure. An included angle between the second direction and the first direction may be an acute angle or a right angle. In the embodiments shown in FIG. 4, the second direction is perpendicular to the first direction.

The covered region 22225 refers to a region of the second surface 2222b covered by the second insulating member 24. The uncovered region 22226 refers to a region of the second surface 2222b not covered by the second insulating member 24. Two sides of the uncovered region 22226 along the second direction are both provided with the covered region 22225. In other words, the second insulating member 24 covers the regions of the second surface 2222b on two sides along the second direction, and the second insulating member 24 does not cover a middle region of the second surface 2222b along the second direction.

Two sides of the uncovered region 22226 are both connected to the covered region 22225. In comparison, the covered region 22225 is closer to another battery cell 20 adjacent to the battery cell 20. When thermal runaway occurs in the another battery cell 20, along the second direction, regions of the first insulating member 23 near two ends have higher temperatures and are more likely to be melted, while a position of the first insulating member 23 near the middle has a lower temperature and is relatively less likely to be melted. The covered region 22225 corresponds to the regions of the first insulating member 23 that are likely to be melted, and the uncovered region 22226 corresponds to the region of the first insulating member 23 that is relatively less likely to be melted. The first insulating member 23 and the second insulating member 24 cooperate to effectively insulate and isolate the first current collecting member 2222 and the first wall portion 213, which is conducive to reducing the risk of short circuit in the battery cell 20, thereby improving the reliability of the battery cell 20.

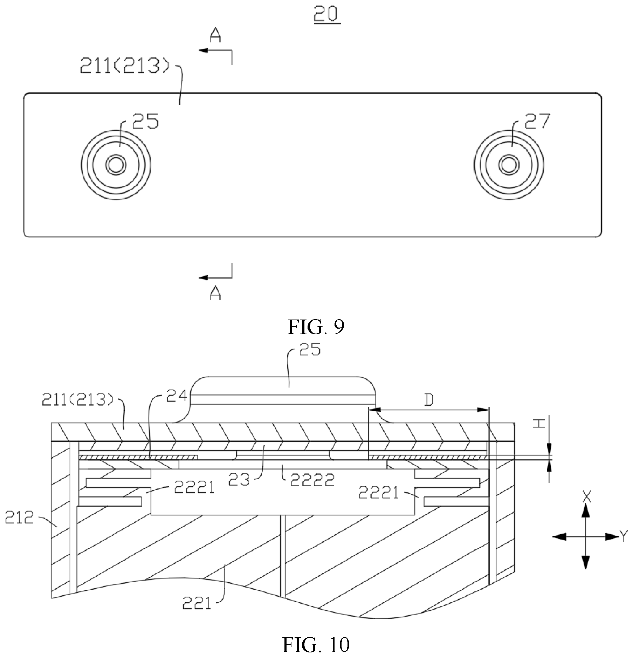

Reference is made to FIG. 9 and FIG. 10. In some embodiments, along the second direction, a minimum width of the second insulating member 24 is D, satisfying: D ≥ 5 mm.

D represents the minimum width of the second insulating member 24 along the second direction. During measurement, a size of the narrowest position of the second insulating member 24 in the second direction may be measured as D.

The minimum width of the second insulating member 24 along the second direction may be: 5 mm, 8 mm, 10 mm, 12 mm, 15 mm, 18 mm, 20 mm, 22 mm, 25 mm, 28 mm, 30 mm, or the like.

When D ≥ 5 mm, the second insulating member 24 has a larger minimum width along the second direction and thus has a better insulating effect.

Optionally, 5 mm ≤ D ≤ 25 mm.

The minimum width of the second insulating member 24 along the second direction may be: 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, or the like.

When D ≥ 5 mm, the second insulating member 24 has a larger minimum width along the second direction and thus has a better insulating effect. When D ≤ 25 mm, the minimum width of the second insulating member 24 along the second direction is not too large, which on one hand is conducive to reducing the risk of interference between the second insulating member 24 and another component, and on the other hand is conducive to reducing material consumption of the second insulating member 24 and reducing the costs of the battery cell 20.

Reference is made to FIG. 4, FIG. 5, FIG. 6, FIG. 7, and FIG. 8. In some embodiments, the battery cell 20 includes a plurality of electrode assemblies 22, the plurality of electrode assemblies 22 are arranged along a second direction, and the second direction intersects the first direction. The body portion 22221 includes a plurality of first connecting portions 22223, the plurality of first connecting portions 22223 are arranged at intervals along the second direction, and the second connecting portion 22224 connects the plurality of first connecting portions 22223. Each first connecting portion 22223 is connected to the first tab 2221 of one electrode assembly 22.

The body portion 22221 may include two first connecting portions 22223, three first connecting portions 22223, four first connecting portions 22223, or more than four first connecting portions 22223. The plurality of first connecting portions 22223 are spaced apart along the second direction. Reference is made to FIG. 5, FIG. 6, FIG. 7, and FIG. 8. In the embodiments shown in FIG. 5, FIG. 6, FIG. 7, and FIG. 8, the body portion 22221 includes two first connecting portions 22223, and the two first connecting portions 22223 are spaced apart along the second direction. The second connecting portion 22224 connects the two first connecting portions 22223.

Each first connecting portion 22223 is connected to the first tab 2221 of one electrode assembly 22, that is, the first connecting portions 22223 are in one-to-one correspondence with the first tabs 2221.

Each first connecting portion 22223 is connected to the first tab 2221 of one electrode assembly 22, and the second connecting portion 22224 connects the plurality of first connecting portions 22223 to achieve electrical connection between the first current collecting member 2222 and the first tabs 2221 of the plurality of electrode assemblies 22. The connection of the first tabs 2221 of the plurality of electrode assemblies 22 to the first electrode terminal 25 through the first current collecting member 2222 is conducive to reducing the assembly difficulty between the first tab 2221 and the first electrode terminal 25.

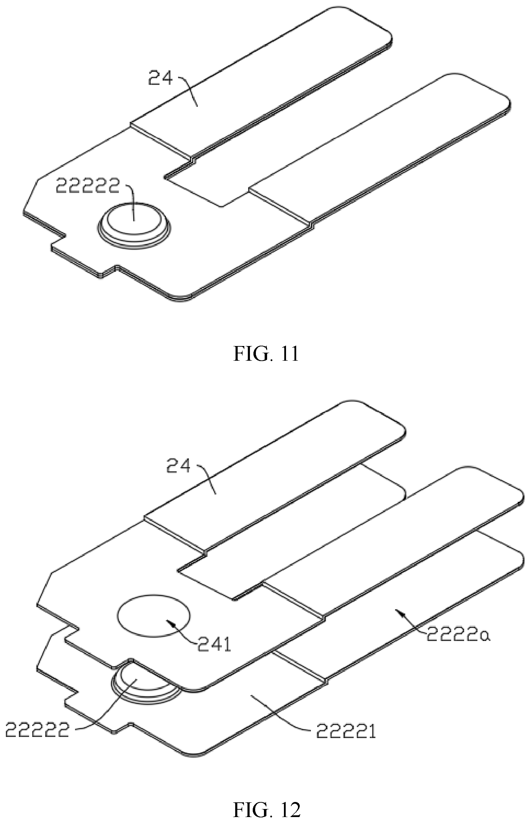

Reference is made to FIG. 11 and FIG. 12. FIG. 11 is a schematic structural diagram of a second insulating member 24 connected to a first current collecting member 2222 according to some other embodiments of the present application. FIG. 12 is an exploded view of a second insulating member 24 and a first current collecting member 2222 according to some other embodiments of the present application. In some embodiments, along the first direction, the second insulating member 24 covers an entire region of a surface of the body portion 22221 facing the first wall portion 213 that is not occupied by the protrusion portion 22222.

Along the first direction, the surface of the body portion 22221 facing the first wall portion 213 includes a first region and a second region, where the first region is occupied by the protrusion portion 22222, that is, the protrusion portion 22222 is provided on the first region. The second region is a region of the surface of the body portion 22221 facing the first wall portion 213 that is not occupied by the protrusion portion 22222. The second insulating member 24 covers the entire second region.

By making the second insulating member 24 cover the entire region of the surface of the body portion 22221 facing the first wall portion 213 that is not occupied by the protrusion portion 22222, the second insulating member 24 has a better insulating effect, further reducing the risk of short circuit in the battery cell 20, thereby helping to improve the reliability of the battery cell 20.

Reference is made to FIG. 11 and FIG. 12. In some embodiments, the second insulating member 24 is provided with an avoidance hole 241, and the protrusion portion 22222 passes through the avoidance hole 241 and is connected to the first electrode terminal 25.

The avoidance hole 241 is a through hole running through the second insulating member 24 along the first direction. The shape of the avoidance hole 241 may match the peripheral contour of the protrusion portion 22222. For example, when the peripheral contour of the protrusion portion 22222 is circular, the avoidance hole 241 is a circular hole. For another example, when the peripheral contour of the protrusion portion 22222 is square, the avoidance hole 241 is a square hole.

The protrusion portion 22222 passes through the avoidance hole 241, one end of the protrusion portion 22222 is connected to the body portion 22221, and the other end of the protrusion portion 22222 is connected to the first electrode terminal 25.

The provision of an avoidance hole 241 on the second insulating member 24 to avoid the protrusion portion 22222 facilitates the connection between the protrusion portion 22222 and the first electrode terminal 25, which is conducive to reducing material consumption of the second insulating member 24. In addition, since the protrusion portion 22222 passes through the avoidance hole 241, the cooperation between the avoidance hole 241 and the protrusion portion 22222 can limit the second insulating member 24, making the second insulating member 24 less likely to be deviated or displaced, thereby allowing the second insulating member 24 to better perform an insulating function.

In some embodiments, the first tab 2221 is connected to a side of the first current collecting member 2222 facing away from the first wall portion 213.

When the first tab 2221 is connected to the side of the first current collecting member 2222 facing away from the first wall portion 213, a surface of the first tab 2221 closest to the first wall portion 213 is connected to a surface of the first current collecting member 2222 facing away from the first wall portion 213.

When the first tab 2221 is connected to the side of the first current collecting member 2222 facing away from the first wall portion 213, the first current collecting member 2222 is more likely to come into contact with the first wall portion 213 to cause a short circuit as compared to the first tab 2221. In this case, by connecting the second insulating member 24 to the first current collecting member 2222 and making at least a portion of the second insulating member 24 located between the first current collecting member 2222 and the first wall portion 213, the first current collecting member 2222 and the first wall portion 213 are insulated and isolated, so that the second insulating member 24 can exert a better insulating effect, further reducing the risk of short circuit in the battery cell 20, thereby helping to improve the reliability of the battery cell 20.

In some other embodiments, the battery cell 20 includes a first electrode terminal 25, and the first electrode terminal 25 is provided on the first wall portion 213. The first electrode lead-out portion 222 includes a first tab 2221 and a first current collecting member 2222, the first tab 2221 is connected to an end of the main body portion 221 facing the first wall portion 213 along the first direction, the first tab 2221 is connected to a surface of the first current collecting member 2222 facing the first wall portion 213, and the first current collecting member 2222 is connected to the first electrode terminal 25. The second insulating member 24 is connected to a surface of the first tab 2221 closest to the first wall portion 213.

The first tab 2221 may be bent around the first current collecting member 2222, so that the first tab 2221 is connected to the surface of the first current collecting member 2222 facing the first wall portion 213. In this case, along the first direction, a portion of the first tab 2221 is located between the first current collecting member 2222 and the first wall portion 213.

The first tab 2221 has a surface closest to the first wall portion 213. Along the first direction, this surface is located between the first current collecting member 2222 and the first wall portion 213. The second insulating member 24 is connected to the surface of the first tab 2221 closest to the first wall portion 213 to insulate and isolate the first tab 2221 and the first wall portion 213.

The first tab 2221 is connected to the first electrode terminal 25 through the first current collecting member 2222, but the first tab 2221 is connected to the surface of the first current collecting member 2222 facing the first wall portion 213, so that the first tab 2221 is more likely to come into contact with the first wall portion 213 to cause a short circuit as compared to the first current collecting member 2222. In this case, by connecting the second insulating member 24 to the surface of the first tab 2221 closest to the first wall portion 213, the first tab 2221 and the first wall portion 213 are insulated and isolated, so that the second insulating member 24 can exert a better insulating effect, further reducing the risk of short circuit in the battery cell 20, thereby helping to improve the reliability of the battery cell 20.

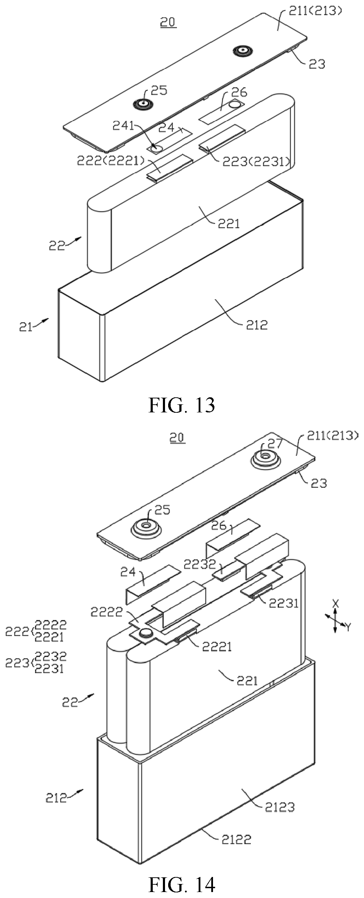

Reference is made to FIG. 13. FIG. 13 is an exploded view of a battery cell 20 according to some other embodiments of the present application. In some embodiments, the battery cell 20 includes a first electrode terminal 25, and the first electrode terminal 25 is provided on the first wall portion 213. The first electrode lead-out portion 222 includes a first tab 2221, and the first tab 2221 is connected to the first electrode terminal 25. The second insulating member 24 is connected to the first tab 2221, and along the first direction, at least a portion of the second insulating member 24 is located between the first tab 2221 and the first wall portion 213.

The first tab 2221 is a positive tab or a negative tab. The first tab 2221 is directly connected to the first electrode terminal 25 to guide the electrical energy of the electrode assembly 22 to the first electrode terminal 25 or receive the electrical energy inputted from the first electrode terminal 25.

The second insulating member 24 is connected to the first tab 2221, and the second insulating member 24 is partially or entirely located between the first tab 2221 and the first wall portion 213 along the first direction to insulate and isolate the first tab 2221 and the first wall portion 213.

The first tab 2221 is directly connected to the first electrode terminal 25. By connecting the second insulating member 24 to the first tab 2221 and making at least a portion of the second insulating member 24 located between the first tab 2221 and the first wall portion 213, the first tab 2221 and the first wall portion 213 are insulated and isolated, so that the second insulating member 24 has a better insulating effect, further reducing the risk of short circuit in the battery cell 20, thereby helping to improve the reliability of the battery cell 20.

In some embodiments, along the first direction, a projection of the second insulating member 24 does not overlap with a projection of the first electrode terminal 25.

"Along the first direction, a projection of the second insulating member 24 does not overlap with a projection of the first electrode terminal 25" may alternatively be understood as that the second insulating member 24 does not cover the first electrode terminal 25 to facilitate the connection between the first tab 2221 and the first electrode terminal 25.

By making the projection of the second insulating member 24 along the first direction not overlap with the projection of the first electrode terminal 25 along the first direction, the risk of interference caused by the second insulating member 24 to the connection between the first electrode terminal 25 and the first tab 2221 is reduced, facilitating the connection between the first electrode terminal 25 and the first tab 2221.

Reference is made to FIG. 13. In some embodiments, the second insulating member 24 is provided with an avoidance hole 241, and the first electrode terminal 25 passes through the avoidance hole 241 and is connected to the first tab 2221.

The avoidance hole 241 is a through hole running through the second insulating member 24 along the first direction. The shape of the avoidance hole 241 may match the peripheral contour of the first electrode terminal 25. For example, when the peripheral contour of the first electrode terminal 25 is circular, the avoidance hole 241 is a circular hole. For another example, when the peripheral contour of the first electrode terminal 25 is square, the avoidance hole 241 is a square hole.

The first electrode terminal 25 passes through the avoidance hole 241, and one end of the first electrode terminal 25 is connected to the first tab 2221.

The provision of an avoidance hole 241 on the second insulating member 24 to avoid the first electrode terminal 25 facilitates the connection between the first tab 2221 and the first electrode terminal 25, which is conducive to reducing material consumption of the second insulating member 24. In addition, since the first electrode terminal 25 passes through the avoidance hole 241, the cooperation between the avoidance hole 241 and the first electrode terminal 25 can limit the second insulating member 24, making the second insulating member 24 less likely to be deviated or displaced, thereby allowing the second insulating member 24 to better perform an insulating function.

In some other embodiments, the second insulating member 24 may alternatively be provided on the first wall portion 213. For example, the first insulating member 23 is provided with an accommodation hole, and the second insulating member 24 is connected to the first wall portion 213 and accommodated in the accommodation hole. When thermal runaway occurring in another battery cell 20 adjacent to the battery cell 20 causes the first insulating member 23 of the battery cell 20 to be melted, the second insulating member 24 can still play a role in insulating and isolating the first electrode lead-out portion 222 and the first wall portion 213 to some extent, reducing the risk of short circuit caused by contact between the first electrode lead-out portion 222 and the first wall portion 213.

In some other embodiments, along the first direction, the second insulating member 24 is provided between the first insulating member 23 and the first wall portion 213. For example, along the first direction, the first insulating member 23 includes an insulating main body and a snap-fit portion protruding from the insulating main body, the snap-fit portion is in snap fit with the first wall portion 213, and the insulating main body is spaced apart from the first wall portion 213. In this case, the second insulating member 24 may be provided between the first insulating member 23 (the insulating main body) and the first wall portion 213.

In some embodiments, the second insulating member 24 is adhered to the first electrode lead-out portion 222.

In an embodiment in which the first electrode lead-out portion 222 includes a first tab 2221 and a first current collecting member 2222, the second insulating member 24 is adhered to the first current collecting member 2222. In an embodiment in which the first electrode lead-out portion 222 includes only the first tab 2221, the second insulating member 24 is adhered to the first tab 2221.

By adhering the second insulating member 24 to the first electrode lead-out portion 222, the second insulating member 24 is connected to the first electrode lead-out portion 222 simply and conveniently, which is conducive to limiting the position of the second insulating member 24, allowing the second insulating member 24 to stably exert an insulating effect.

In some other embodiments, the second insulating member 24 wraps the first electrode lead-out portion 222.

In an embodiment in which the first electrode lead-out portion 222 includes a first tab 2221 and a first current collecting member 2222, the second insulating member 24 may wrap only the first electrode lead-out portion 222 or may wrap the first tab 2221 and the first electrode lead-out portion 222. In an embodiment in which the first electrode lead-out portion 222 includes only the first tab 2221, the second insulating member 24 wraps the first tab 2221.

By making the second insulating member 24 wrap the first electrode lead-out portion 222, on one hand, the first electrode lead-out portion 222 can be well covered, so that the first electrode lead-out portion 222 and the first wall portion 213 are insulated and isolated. On the other hand, when the second insulating member 24 wraps the first electrode lead-out portion 222, the second insulating member 24 is less likely to be deviated or displaced relative to the first electrode lead-out portion 222, thereby allowing the second insulating member 24 to better perform an insulating function.

In some embodiments, the second insulating member 24 is an insulating film connected to the first electrode lead-out portion 222.

Optionally, the second insulating member 24 is a PI film (Polyimide Film, polyimide film) connected to the first electrode lead-out portion 222.

The second insulating member 24 is an insulating film. The insulating film can effectively insulate and isolate the first electrode lead-out portion 222 and the first wall portion 213 without occupying too much space inside the housing 21, so that the battery cell 20 can still have a high energy density.

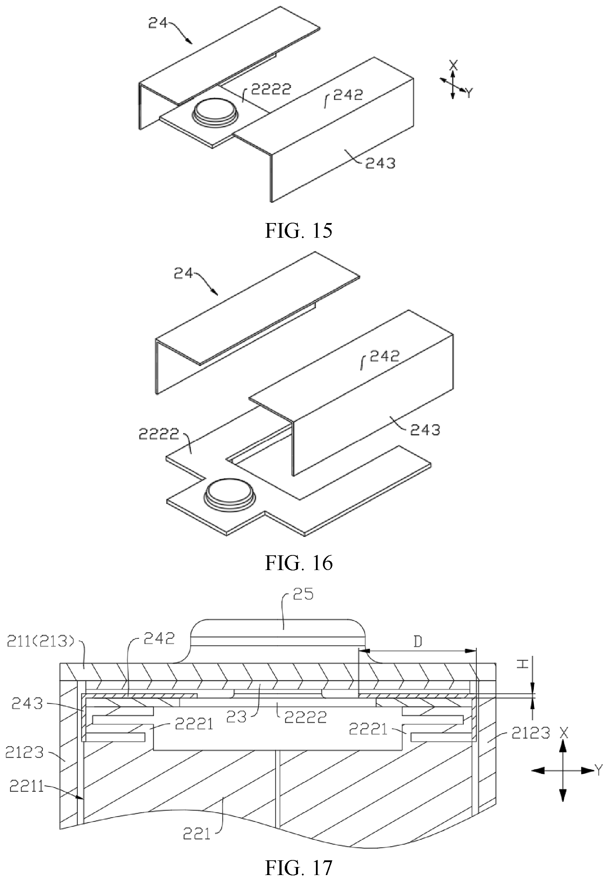

Reference is made to FIG. 14, FIG. 15, FIG. 16, and FIG. 17. FIG. 14 is an exploded view of a battery cell 20 according to some other embodiments of the present application. FIG. 15 is a schematic structural diagram of a second insulating member 24 connected to a first current collecting member 2222 according to some other embodiments of the present application. FIG. 16 is an exploded view of a second insulating member 24 and a first current collecting member 2222 according to some other embodiments of the present application. FIG. 17 is a cross-sectional view of a battery cell 20 according to some other embodiments of the present application. In some embodiments, a thickness of the insulating film is H, satisfying: 0.01 mm ≤ H ≤ 0.5 mm.

H represents the thickness of the insulating film. During measurement, measurement may be performed a plurality of times, and an average value is taken as H.

The thickness of the insulating film may be: H = 0.01 mm, 0.05 mm, 0.1 mm, 0.15 mm, 0.2 mm, 0.25 mm, 0.3 mm, 0.35 mm, 0.4 mm, 0.45 mm, 0.5 mm, or the like.

When H ≥ 0.01 mm, the thickness of the insulating film is larger, so that the insulating film is less likely to be fractured, and thus has better mechanical properties and insulating effect. When H ≤ 0.5 mm, the thickness of the insulating film is not too large, which is conducive to reducing the occupation of the internal space of the battery cell 20, thereby increasing the energy density of the battery cell 20. Therefore, when 0.01 mm ≤ H ≤ 0.5 mm, the insulating effect of the insulating film and the energy density of the battery cell 20 can be balanced.

Optionally, 0.05 mm ≤ H ≤ 0.2 mm.

The thickness of the insulating film may be: H = 0.01 mm, 0.02 mm, 0.03 mm, 0.04 mm, 0.05 mm, 0.06 mm, 0.07 mm, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, 0.2 mm, or the like.

When H ≥ 0.05 mm, the thickness of the insulating film is larger, so that the insulating film is even less likely to be fractured, and thus has better mechanical properties and insulating effect. When H ≤ 0.2 mm, the thickness of the insulating film is not too large, which is conducive to reducing the occupation of the internal space of the battery cell 20, thereby increasing the energy density of the battery cell 20. Therefore, when 0.05 mm ≤ H ≤ 0.2 mm, the insulating effect of the insulating film and the energy density of the battery cell 20 can be better balanced.

Reference is made to FIG. 14, FIG. 15, FIG. 16, and FIG. 17. In some embodiments, the housing 21 has a third wall portion 2123 adjacent to the first wall portion 213, and the third wall portion 2123 is a wall portion with the largest outer surface area in the housing 21. The second insulating member 24 includes a first insulating portion 242 and a second insulating portion 243, at least a portion of the first insulating portion 242 is provided between the first electrode lead-out portion 222 and the first wall portion 213 along the first direction, and at least a portion of the second insulating portion 243 is provided between the first electrode lead-out portion 222 and the third wall portion 2123 along a thickness direction of the third wall portion 2123.

The third wall portion 2123 is the wall portion with the largest outer surface area in the housing 21, commonly known as a large face. The first wall portion 213 is adjacent to the third wall portion 2123. Reference is made to FIG. 14, where in the embodiments shown in FIG. 14, the first wall portion 213 is the end cover 211. In some other embodiments, the first wall portion 213 may alternatively be a bottom wall of the housing body 212.

Reference is made to FIG. 14, where the thickness direction of the third wall portion 2123 is a direction Y shown in the figure, and the thickness direction of the third wall portion 2123 is parallel to the second direction.

The first insulating portion 242 is a portion of the second insulating member 24 provided between the first electrode lead-out portion 222 and the first wall portion 213 along the first direction to insulate and isolate the first electrode lead-out portion 222 and the first wall portion 213. In some embodiments, a portion of the first insulating portion 242 is provided between the first electrode lead-out portion 222 and the first wall portion 213 along the first direction. In some other embodiments, the entire first insulating portion 242 is provided between the first electrode lead-out portion 222 and the first wall portion 213 along the first direction.

The second insulating portion 243 is a portion of the second insulating member 24 provided between the first electrode lead-out portion 222 and the first wall portion 213 along the thickness direction of the third wall portion 2123 to insulate and isolate the first electrode lead-out portion 222 and the third wall portion 2123. In some embodiments, a portion of the second insulating portion 243 is provided between the first electrode lead-out portion 222 and the third wall portion 2123 along the thickness direction of the third wall portion 2123. In some other embodiments, the entire second insulating portion 243 is provided between the first electrode lead-out portion 222 and the third wall portion 2123 along the thickness direction of the third wall portion 2123.

The first insulating portion 242 is connected to the second insulating portion 243. Optionally, the first insulating portion 242 and the second insulating portion 243 are integrally formed.

At least a portion of the first insulating portion 242 is provided between the first electrode lead-out portion 222 and the first wall portion 213 along the first direction. During normal use, both the first insulating member 23 and the first insulating portion 242 can insulate and isolate the first electrode lead-out portion 222 and the first wall portion 213, reducing the risk of short circuit caused by contact between the first electrode lead-out portion 222 and the first wall portion 213. Since the material damage temperature of the second insulating member 24 is higher than the material damage temperature of the first insulating member 23, when thermal runaway occurring in another battery cell 20 adjacent to the battery cell 20 causes the first insulating member 23 of the battery cell 20 to be melted, the first insulating portion 242 can still play a role in insulating and isolating the first electrode lead-out portion 222 and the first wall portion 213 to some extent, reducing the risk of short circuit caused by contact between the first electrode lead-out portion 222 and the first wall portion 213. In addition, at least a portion of the second insulating portion 243 is provided between the first electrode lead-out portion 222 and the third wall portion 2123 along the thickness direction of the third wall portion 2123 to insulate and isolate the first electrode lead-out portion 222 and the third wall portion 2123. Since the material damage temperature of the second insulating member 24 is higher, when thermal runaway occurs in another battery cell 20 adjacent to the battery cell 20, the second insulating portion 243 can still play a role in insulating and isolating the first electrode lead-out portion 222 and the third wall portion 2123 to some extent, reducing the risk of short circuit caused by contact between the first electrode lead-out portion 222 and the third wall portion 2123. In this way, even if thermal runaway occurs in another battery cell 20 adjacent to the battery cell 20, it is less likely to cause short circuit in the battery cell 20 and thus avoids continuing to trigger thermal runaway, which is conducive to limiting heat diffusion and improving the reliability of the battery cell 20.

Reference is made to FIG. 14, FIG. 15, FIG. 16, and FIG. 17. In some embodiments, along the thickness direction of the third wall portion 2123, a projection of the first electrode lead-out portion 222 is entirely located within the second insulating portion 243.

In an embodiment in which the first electrode lead-out portion 222 includes only the first tab 2221, along the thickness direction of the third wall portion 2123, a projection of the first tab 2221 is entirely located within the second insulating portion 243.

In an embodiment in which the first electrode lead-out portion 222 includes a first tab 2221 and a first current collecting member 2222, along the thickness direction of the third wall portion 2123, the projections of both the first tab 2221 and the first current collecting member 2222 are entirely located within the second insulating portion 243.

Making the projection of the first electrode lead-out portion 222 along the thickness direction of the third wall portion 2123 entirely located within the second insulating portion 243, that is, making the second insulating portion 243 completely separates the first electrode lead-out portion 222 and the third wall portion 2123, is conducive to improving the insulating effect of the second insulating portion 243, thereby reducing the risk of short circuit caused by contact between the first electrode lead-out portion 222 and the third wall portion 2123.

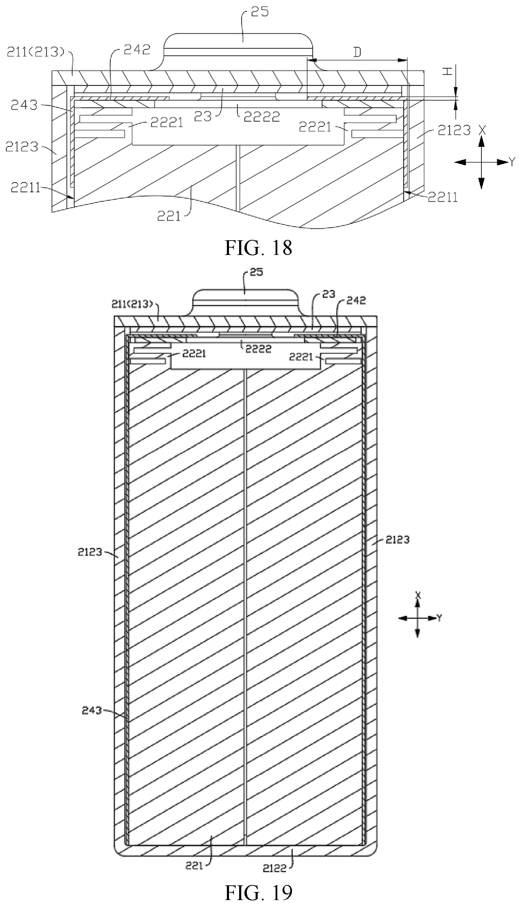

Reference is made to FIG. 18. FIG. 18 is a cross-sectional view of a battery cell 20 according to some other embodiments of the present application. In some other embodiments, along the thickness direction of the third wall portion 2123, a portion of the second insulating portion 243 is provided between the main body portion 221 and the third wall portion 2123.

Along the thickness direction of the third wall portion 2123, a portion of the second insulating portion 243 is provided between the first electrode lead-out portion 222 and the third wall portion 2123 to insulate and isolate the first electrode lead-out portion 222 and the third wall portion 2123, and another portion of the second insulating portion 243 is provided between the main body portion 221 and the third wall portion 2123 to insulate and isolate the main body portion 221 and the third wall portion 2123. In other words, the second insulating portion 243 extends downward from the first insulating portion 242 to between the main body portion 221 and the third wall portion 2123 and separates the first electrode lead-out portion 222 and the third wall portion 2123.

A portion of the second insulating portion 243 is provided between the main body portion 221 and the third wall portion 2123 along the thickness direction of the third wall portion 2123 to insulate and isolate the main body portion 221 and the third wall portion 2123. Since the material damage temperature of the second insulating member 24 is higher, when thermal runaway occurs in another battery cell 20 adjacent to the battery cell 20, the second insulating portion 243 can still play a role in insulating and isolating the main body portion 221 and the third wall portion 2123 to some extent, reducing the risk of short circuit caused by contact between the main body portion 221 and the third wall portion 2123. In this way, even if thermal runaway occurs in another battery cell 20 adjacent to the battery cell 20, it is less likely to cause short circuit in the battery cell 20 and thus avoids continuing to trigger thermal runaway, which is conducive to limiting heat diffusion and improving the reliability of the battery cell 20.

Reference is made to FIG. 18. In some embodiments, the second insulating portion 243 is connected to the main body portion 221.

The second insulating portion 243 is connected to an outer surface of the main body portion 221. For example, the second insulating portion 243 may be adhered to the outer surface of the main body portion 221.

By connecting the second insulating portion 243 to the main body portion 221, on one hand, relative positions of the second insulating portion 243 and the main body portion 221 as well as relative positions of the second insulating portion 243 and the first electrode lead-out portion 222 are limited, so that the second insulating portion 243 can be stably located between the first electrode lead-out portion 222 and the third wall portion 2123 as well as between the main body portion 221 and the third wall portion 2123, thereby insulating and isolating the first electrode lead-out portion 222 and the third wall portion 2123 as well as insulating and isolating the main body portion 221 and the third wall portion 2123. On the other hand, it is conducive to increasing a connection area between the second insulating member 24 and another component, thereby better fixing the second insulating member 24.

Reference is made to FIG. 18 and FIG. 19. FIG. 19 is a cross-sectional view of a battery cell 20 according to some other embodiments of the present application. In some embodiments, along the thickness direction of the third wall portion 2123, the main body portion 221 includes a fourth surface 2211 facing the third wall portion 2123, and the second insulating portion 243 covers the entire fourth surface 2211.

The fourth surface 2211 is a surface of the main body portion 221 facing the third wall portion 2123 along the thickness direction of the third wall portion 2123. In some embodiments, the main body portion 221 includes a straight region and two bent regions, and the two bent regions are connected to two ends of the straight region. The fourth surface 2211 is a surface of the straight region facing the third wall portion 2123 along the thickness direction of the third wall portion 2123.

Along the thickness direction of the third wall portion 2123, the second insulating portion 243 covers the entire fourth surface 2211. In other words, a projection of the fourth surface 2211 along the thickness direction of the third wall portion 2123 is entirely located within the second insulating portion 243.

By making the second insulating portion 243 cover the entire fourth surface 2211, the second insulating portion 243 has a better insulating effect, further reducing the risk of short circuit in the battery cell 20, thereby helping to improve the reliability of the battery cell 20.

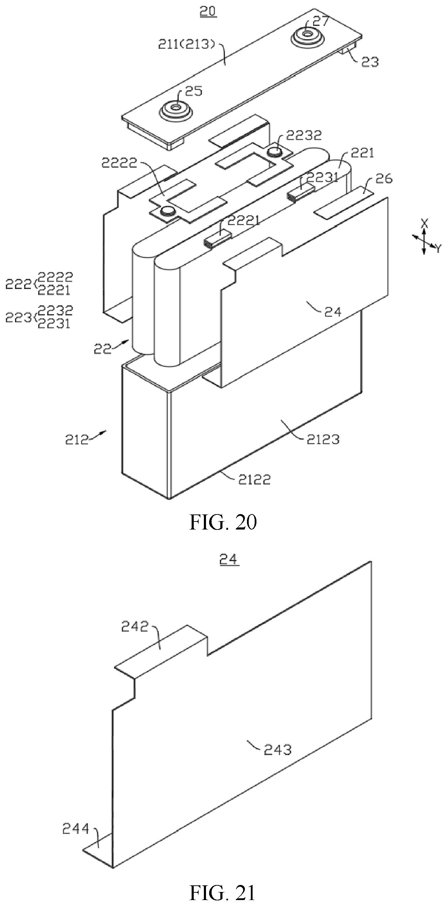

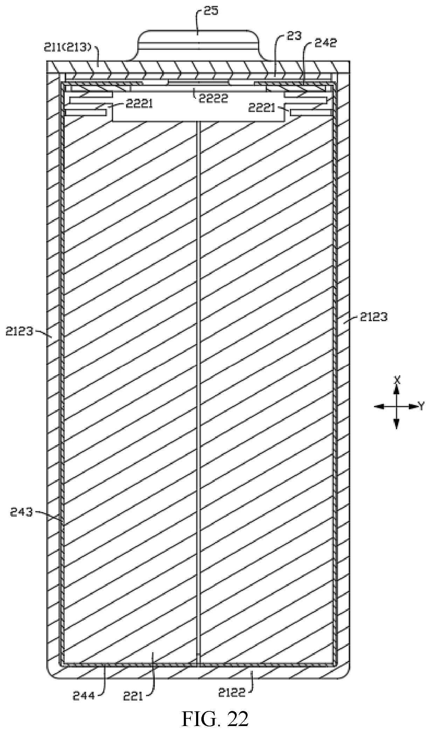

Reference is made to FIG. 20, FIG. 21, and FIG. 22. FIG. 20 is an exploded view of a battery cell 20 according to some other embodiments of the present application. FIG. 21 is a schematic structural diagram of a second insulating member 24 according to some other embodiments of the present application. FIG. 22 is a cross-sectional view of a battery cell 20 according to some other embodiments of the present application. In some other embodiments, the housing 21 has a second wall portion 2122. Along the first direction, the first wall portion 213 and the second wall portion 2122 are opposite each other, and the third wall portion 2123 connects the first wall portion 213 and the second wall portion 2122. The second insulating member 24 further includes a third insulating portion 244, and the second insulating portion 243 connects the first insulating portion 242 and the third insulating portion 244. Along the first direction, at least a portion of the third insulating portion 244 is provided between the main body portion 221 and the second wall portion 2122.

The second wall portion 2122 is a wall portion of the housing 21 facing the first wall portion 213 along the first direction, and the third wall portion 2123 connects the first wall portion 213 and the second wall portion 2122. Reference is made to FIG. 20, FIG. 21, and FIG. 22. In the embodiments shown in the figure, the first wall portion 213 is the end cover 211, and the third wall portion 2123 is a bottom wall of the housing body 212.

The third insulating portion 244 is a portion of the second insulating member 24 provided between the main body portion 221 and the second wall portion 2122 along the first direction to insulate and isolate the main body portion 221 and the second wall portion 2122. In some embodiments, a portion of the third insulating portion 244 is provided between the main body portion 221 and the second wall portion 2122 along the first direction. In some other embodiments, the entire third insulating portion 244 is provided between the main body portion 221 and the second wall portion 2122 along the first direction.

In some embodiments, the first insulating portion 242, the second insulating portion 243, and the third insulating portion 244 are integrally formed.

At least a portion of the third insulating portion 244 is provided between the main body portion 221 and the second wall portion 2122 along the first direction to insulate and isolate the main body portion 221 and the second wall portion 2122. Since the material damage temperature of the second insulating member 24 is higher, when thermal runaway occurs in another battery cell 20 adjacent to the battery cell 20, the third insulating portion 244 can still play a role in insulating and isolating the main body portion 221 and the second wall portion 2122 to some extent, reducing the risk of short circuit caused by contact between the main body portion 221 and the second wall portion 2122. In this way, even if thermal runaway occurs in another battery cell 20 adjacent to the battery cell 20, it is less likely to cause short circuit in the battery cell 20 and thus avoids continuing to trigger thermal runaway, which is conducive to limiting heat diffusion and improving the reliability of the battery cell 20.

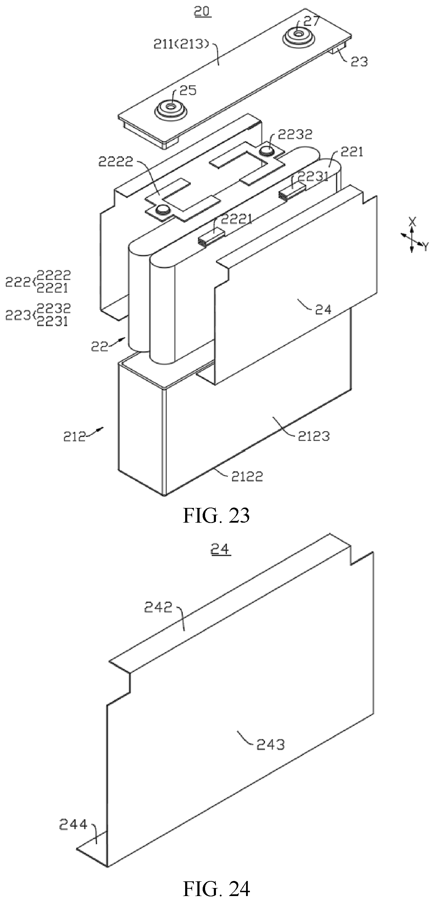

Reference is made to FIG. 23 and FIG. 24. FIG. 23 is an exploded view of a battery cell 20 according to some other embodiments of the present application. FIG. 24 is a schematic structural diagram of a second insulating member 24 according to some other embodiments of the present application. In some other embodiments, the electrode assembly 22 includes a second electrode lead-out portion 223, the first electrode lead-out portion 222 and the second electrode lead-out portion 223 are provided at the same end of the main body portion 221, and the second electrode lead-out portion 223 has a polarity opposite to that of the first electrode lead-out portion 222. Along the first direction, a portion of the first insulating portion 242 is provided between the second electrode lead-out portion 223 and the first wall portion 213.

The second electrode lead-out portion 223 is a structure configured to lead out the electrical energy from the main body portion 221 or introduce the electrical energy into the main body portion 221. The second electrode lead-out portion 223 includes a second tab 2231, and the second tab 2231 is the above-mentioned negative tab or positive tab. The battery cell 20 includes a second electrode terminal 27, and the second tab 2231 may be directly connected to the second electrode terminal 27. In some other embodiments, the second electrode lead-out portion 223 may further include other electrical connection components connected to the second tab 2231. For example, the second electrode lead-out portion 223 may further include a second current collecting member 2232, and the second current collecting member 2232 connects the second tab 2231 and the second electrode terminal 27 to guide the electrical energy of the electrode assembly 22 to the second electrode terminal 27 or receive the electrical energy inputted from the second electrode terminal 27.

The first tab 2221 and the second tab 2231 have opposite polarities. For example, when the first tab 2221 is a positive tab, the second tab 2231 is a negative tab. When the first tab 2221 is a negative tab, the second tab 2231 is a positive tab. Similarly, the first electrode terminal 25 and the second electrode terminal 27 have opposite polarities. For example, when the first electrode terminal 25 is a positive electrode terminal, the second electrode terminal 27 is a negative electrode terminal. When the first electrode terminal 25 is a negative electrode terminal, the second electrode terminal 27 is a positive electrode terminal.

Along the first direction, both the first electrode lead-out portion 222 and the second electrode lead-out portion 223 are provided at an end of the main body portion 221 facing the first wall portion 213.

A portion of the first insulating portion 242 is provided between the first electrode lead-out portion 222 and the first wall portion 213 along the first direction to insulate and isolate the first electrode lead-out portion 222 and the first wall portion 213, and another portion of the first insulating portion 242 is provided between the second electrode lead-out portion 223 and the first wall portion 213 along the first direction to insulate and isolate the second electrode lead-out portion 223 and the first wall portion 213.

A portion of the first insulating portion 242 is provided between the first electrode lead-out portion 222 and the first wall portion 213 to insulate and isolate the first electrode lead-out portion 222 and the first wall portion 213, and another portion of the first insulating portion 242 is provided between the second electrode lead-out portion 223 and the first wall portion 213 to insulate and isolate the second electrode lead-out portion 223 and the first wall portion 213. The first insulating portion 242 can not only insulate and isolate the first electrode lead-out portion 222 and the first wall portion 213 but also insulate and isolate the second electrode lead-out portion 223 and the first wall portion 213. As a single component, the first insulating portion 242 achieves various functions, which is conducive to simplifying the structure of the battery cell 20.

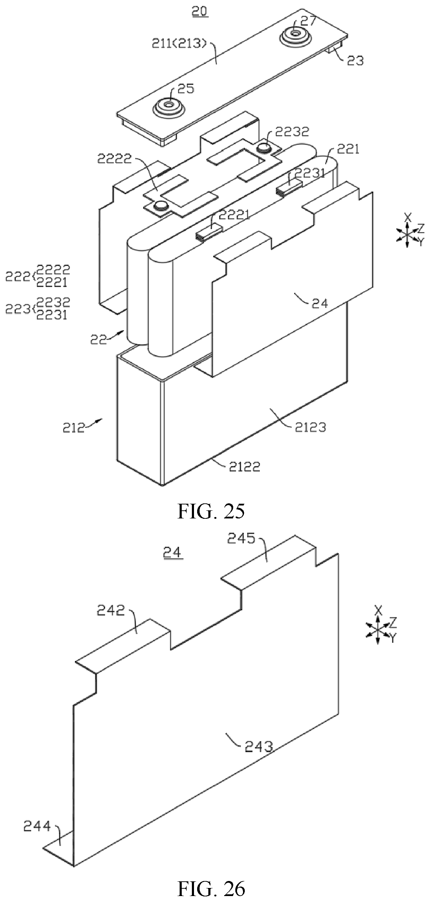

Reference is made to FIG. 25 and FIG. 26. FIG. 25 is an exploded view of a battery cell 20 according to some other embodiments of the present application. FIG. 26 is a schematic structural diagram of a second insulating member 24 according to some other embodiments of the present application. In some other embodiments, the electrode assembly 22 includes a second electrode lead-out portion 223, the first electrode lead-out portion 222 and the second electrode lead-out portion 223 are provided at the same end of the main body portion 221, and the second electrode lead-out portion 223 has a polarity opposite to that of the first electrode lead-out portion 222. The second insulating member 24 further includes a fourth insulating portion 245, and the second insulating portion 243 connects the first insulating portion 242 and the fourth insulating portion 245. Along the first direction, at least a portion of the fourth insulating portion 245 is provided between the second electrode lead-out portion 223 and the first wall portion 213.

The fourth insulating portion 245 is a portion of the second insulating member 24 provided between the second electrode lead-out portion 223 and the first wall portion 213 along the first direction to insulate and isolate the second electrode lead-out portion 223 and the first wall portion 213. In some embodiments, a portion of the fourth insulating portion 245 is provided between the second electrode lead-out portion 223 and the first wall portion 213 along the first direction. In some other embodiments, the entire fourth insulating portion 245 is provided between the second electrode lead-out portion 223 and the first wall portion 213 along the first direction.

In some embodiments, the first insulating portion 242, the second insulating portion 243, the third insulating portion 244, and the fourth insulating portion 245 are integrally formed.

At least a portion of the fourth insulating portion 245 is provided between the second electrode lead-out portion 223 and the first wall portion 213 along the first direction to insulate and isolate the second electrode lead-out portion 223 and the first wall portion 213. Since the material damage temperature of the second insulating member 24 is higher, when thermal runaway occurs in another battery cell 20 adjacent to the battery cell 20, the fourth insulating portion 245 can still play a role in insulating and isolating the second electrode lead-out portion 223 and the first wall portion 213 to some extent, reducing the risk of short circuit caused by contact between the second electrode lead-out portion 223 and the first wall portion 213. In this way, even if thermal runaway occurs in another battery cell 20 adjacent to the battery cell 20, it is less likely to cause short circuit in the battery cell 20 and thus avoids continuing to trigger thermal runaway, which is conducive to limiting heat diffusion and improving the reliability of the battery cell 20.

Reference is made to FIG. 25 and FIG. 26. In some embodiments, the first electrode lead-out portion 222 and the second electrode lead-out portion 223 are spaced apart along a third direction. Along the third direction, the first insulating portion 242 and the fourth insulating portion 245 are spaced apart.

The third direction is an arrangement direction of the first electrode lead-out portion 222 and the second electrode lead-out portion 223. Reference is made to FIG. 25 and FIG. 26, where the third direction is a direction Z shown in the figure.

Along the third direction, there is a spacing between the first insulating portion 242 and the fourth insulating portion 245.

The first insulating portion 242 is provided corresponding to the first electrode lead-out portion 222, and the fourth insulating portion 245 is provided corresponding to the second electrode lead-out portion 223. The first insulating portion 242 and the fourth insulating portion 245 are spaced apart along the third direction. This is conducive to reducing respective sizes of the first insulating portion 242 and the fourth insulating portion 245, reducing material consumption of the first insulating portion 242 and the fourth insulating portion 245, and reducing the costs of the battery cell 20.

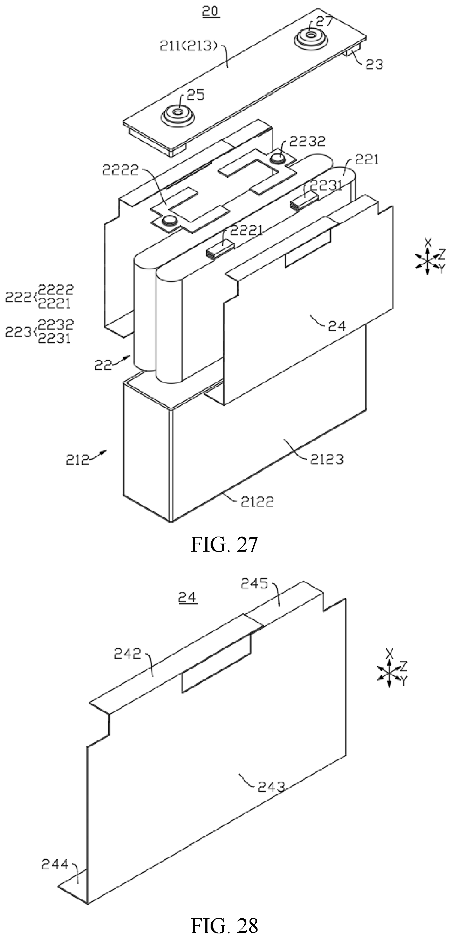

Reference is made to FIG. 27 and FIG. 28. FIG. 27 is an exploded view of a battery cell 20 according to some other embodiments of the present application. FIG. 28 is a schematic structural diagram of a second insulating member 24 according to some other embodiments of the present application. In some other embodiments, along the first direction, the first insulating portion 242 and the fourth insulating portion 245 are partially stacked.

At least one of the first insulating portion 242 and the fourth insulating portion 245 extends along the third direction and they overlap with each other, so that the first insulating portion 242 and the fourth insulating portion 245 are partially stacked along the first direction.

Reference is made to FIG. 27 and FIG. 28, where in the embodiments shown in the figure, the first insulating portion 242 extends along the third direction and overlaps with the upside of the fourth insulating portion 245, so that the first insulating portion 242 and the fourth insulating portion 245 are partially stacked along the first direction.

In some other embodiments, the fourth insulating portion 245 extends along the third direction and overlaps with the upside of the first insulating portion 242, so that the first insulating portion 242 and the fourth insulating portion 245 are partially stacked along the first direction.

In some other embodiments, the first insulating portion 242 extends toward the fourth insulating portion 245 along the third direction, the fourth insulating portion 245 extends toward the first insulating portion 242 along the third direction and overlap with the first insulating portion 242, so that the first insulating portion 242 and the fourth insulating portion 245 are partially stacked along the first direction.

By making the first insulating portion 242 and the fourth insulating portion 245 partially stacked, at least one of the first insulating portion 242 and the fourth insulating portion 245 covers, along the first direction, a portion of the main body portion 221 located between the first electrode lead-out portion 222 and the second electrode lead-out portion 223, reducing the risk of short circuit caused by contact between the main body portion 221 and the first wall portion 213.

Reference is still made to FIG. 23 and FIG. 24. In some embodiments, the electrode assembly 22 includes a second electrode lead-out portion 223, the first electrode lead-out portion 222 and the second electrode lead-out portion 223 are provided at the same end of the main body portion 221, and the second electrode lead-out portion 223 has a polarity opposite to that of the first electrode lead-out portion 222. Along the first direction, a portion of the second insulating member 24 is provided between the second electrode lead-out portion 223 and the first wall portion 213.

A portion of the second insulating member 24 is provided between the first electrode lead-out portion 222 and the first wall portion 213 to insulate and isolate the first electrode lead-out portion 222 and the first wall portion 213, and another portion of the second insulating member 24 is provided between the second electrode lead-out portion 223 and the first wall portion 213 to insulate and isolate the second electrode lead-out portion 223 and the first wall portion 213. The second insulating member 24 can not only insulate and isolate the first electrode lead-out portion 222 and the first wall portion 213 but also insulate and isolate the second electrode lead-out portion 223 and the first wall portion 213. As a single component, the second insulating member 24 achieves various functions, which is conducive to simplifying the structure of the battery cell 20.

Reference is still made to FIG. 14. In some embodiments, the electrode assembly 22 includes a second electrode lead-out portion 223, the first electrode lead-out portion 222 and the second electrode lead-out portion 223 are provided at the same end of the main body portion 221, and the second electrode lead-out portion 223 has a polarity opposite to that of the first electrode lead-out portion 222. The first insulating member 23 is further configured to insulate and isolate the second electrode lead-out portion 223 and the first wall portion 213. The battery cell 20 further includes a third insulating member 26; and along the first direction, at least a portion of the third insulating member 26 is provided between the second electrode lead-out portion 223 and the first wall portion 213. A material damage temperature of the third insulating member 26 is higher than the material damage temperature of the first insulating member 23.

The first insulating member 23 is provided on an inner side of the first wall portion 213, and the first insulating member 23 is configured to isolate the first electrode lead-out portion 222 and the first wall portion 213 as well as isolate the second electrode lead-out portion 223 and the first wall portion 213.

The third insulating member 26 is partially or entirely provided between the second electrode lead-out portion 223 and the first wall portion 213 along the first direction to insulate and isolate the second electrode lead-out portion 223 and the first wall portion 213. During normal use of the battery cell 20, both the first insulating member 23 and the third insulating member 26 can play a role in insulating and isolating the second electrode lead-out portion 223 and the first wall portion 213.

The material damage temperature of the third insulating member 26 is higher than the material damage temperature of the first insulating member 23. When thermal runaway occurs in the battery cell 20, the first insulating member 23 first reaches the material damage temperature and is melted, and the third insulating member 26 can still insulate and isolate the second electrode lead-out portion 223 and the first wall portion 213 when the first insulating member 23 is melted, reducing the risk of short circuit caused by contact between the second electrode lead-out portion 223 and the first wall portion 213.

At least a portion of the third insulating member 26 is provided between the second electrode lead-out portion 223 and the first wall portion 213 along the first direction to insulate and isolate the second electrode lead-out portion 223 and the first wall portion 213. Since the material damage temperature of the third insulating member 26 is higher than the material damage temperature of the first insulating member 23, when thermal runaway occurring in another battery cell 20 adjacent to the battery cell 20 causes the first insulating member 23 of the battery cell 20 to be melted, the third insulating member 26 can still play a role in insulating and isolating the second electrode lead-out portion 223 and the first wall portion 213 to some extent, reducing the risk of short circuit caused by contact between the second electrode lead-out portion 223 and the first wall portion 213. In this way, even if thermal runaway occurs in another battery cell 20 adjacent to the battery cell 20, it is less likely to cause short circuit in the battery cell 20 and thus avoids continuing to trigger thermal runaway, which is conducive to limiting heat diffusion and improving the reliability of the battery cell 20.

Reference is still made to FIG. 14. In some embodiments, the first electrode lead-out portion 222 and the second electrode lead-out portion 223 are spaced apart along a third direction. Along the third direction, the second insulating member 24 and the third insulating member 26 are spaced apart.

"Along the third direction, the second insulating member 24 and the third insulating member 26 are spaced apart" also means that there is a spacing between the second insulating member 24 and the third insulating member 26 along the third direction.

The second insulating member 24 is provided corresponding to the first electrode lead-out portion 222, and the third insulating member 26 is provided corresponding to the second electrode lead-out portion 223. The second insulating member 24 and the third insulating member 26 are spaced apart along the third direction. This is conducive to reducing respective sizes of the second insulating member 24 and the third insulating member 26, reducing material consumption of the second insulating member 24 and the third insulating member 26, and reducing the costs of the battery cell 20.

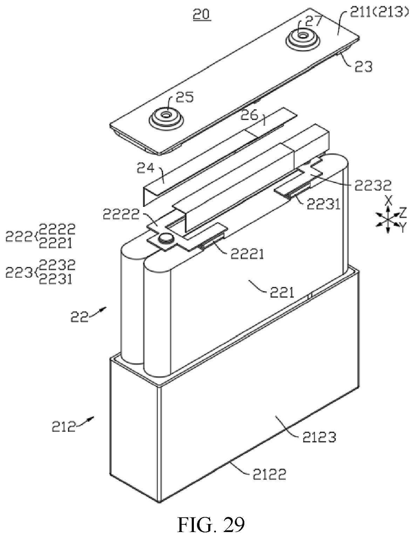

Reference is made to FIG. 29. FIG. 29 is an exploded view of a battery cell 20 according to some other embodiments of the present application. In some other embodiments, along the first direction, the second insulating member 24 and the third insulating member 26 are partially stacked.

At least one of the second insulating member 24 and the third insulating member 26 extends along the third direction and they overlap with each other, so that the second insulating member 24 and the third insulating member 26 are partially stacked along the first direction.

Reference is made to FIG. 29. In the embodiments shown in the figure, the second insulating member 24 extends along the third direction and overlaps with the upside of the third insulating member 26, so that the second insulating member 24 and the third insulating member 26 are partially stacked along the first direction.

In some other embodiments, the third insulating member 26 extends along the third direction and overlaps with the upside of the second insulating member 24, so that the second insulating member 24 and the third insulating member 26 are partially stacked along the first direction.

In some other embodiments, the second insulating member 24 extends toward the third insulating member 26 along the third direction, the third insulating member 26 extends toward the second insulating member 24 along the third direction, and they overlap with each other, so that the second insulating member 24 and the third insulating member 26 are partially stacked along the first direction.

By making the second insulating member 24 and the third insulating member 26 partially stacked, at least one of the second insulating member 24 and the third insulating member 26 covers, along the first direction, a portion of the main body portion 221 located between the first electrode lead-out portion 222 and the second electrode lead-out portion 223, reducing the risk of short circuit caused by contact between the main body portion 221 and the first wall portion 213.

In some embodiments, the material damage temperature of the second insulating member 24 is higher than or equal to 300°C.

When thermal runaway occurs in another battery cell 20 adjacent to the battery cell 20, the temperature inside the battery cell 20 can rise to 200°C. However, the material damage temperature of the second insulating member 24 is higher than or equal to 300°C. Therefore, when thermal runaway occurs in another battery cell 20 adjacent to the battery cell 20, it is less likely to cause the second insulating member 24 to be melted, so that the second insulating member 24 can play an insulating and isolating role, reducing the risk of short circuit in the battery cell 20.

Optionally, a material of the second insulating member 24 includes at least one of polyimide, polyether ether ketone, and polytetrafluoroethylene.

Polyimide, polyether ether ketone, and polytetrafluoroethylene have good high temperature resistance and good insulating effect, and can insulate and isolate the first electrode lead-out portion 222 and the first wall portion 213 at temperatures higher than 200°C, reducing the risk of short circuit in the battery cell 20, thereby improving the reliability of the battery cell 20.

In some embodiments, the electrode assembly 22 includes a second electrode lead-out portion 223, and the second electrode lead-out portion 223 is connected to the main body portion 221. The first electrode lead-out portion 222 and the second electrode lead-out portion 223 may be located at the same end of the main body portion 221, or the first electrode lead-out portion 222 and the second electrode lead-out portion 223 may be located at two ends of the main body portion 221.

When the first electrode lead-out portion 222 and the second electrode lead-out portion 223 are located at the same end of the main body portion 221, the first insulating member 23 can also insulate and isolate the second electrode lead-out portion 223 and the first wall portion 213. The battery cell 20 further includes a third insulating member 26. Along the first direction, at least a portion of the third insulating member 26 is provided between the second electrode lead-out portion 223 and the first wall portion 213, the material damage temperature of the third insulating member 26 is higher than the material damage temperature of the first insulating member 23, and the third insulating member 26 is configured to insulate and isolate the second electrode lead-out portion 223 and the first wall portion 213 when the first insulating member 23 is melted.

The battery cell 20 includes a second electrode terminal 27, and the second electrode terminal 27 is provided on the first wall portion 213. In some embodiments, the second electrode lead-out portion 223 may include a second tab 2231 and a second current collecting member 2232, the second tab 2231 has a polarity opposite to that of the first tab 2221, the second tab 2231 is connected to an end of the main body portion 221 facing the first wall portion 213 along the first direction, and the second current collecting member 2232 connects the second electrode terminal 27 and the second tab 2231. The third insulating member 26 may be connected to the second current collecting member 2232, and a specific manner in which the third insulating member 26 is connected to the second current collecting member 2232 may refer to the manner in which the second insulating member 24 is connected to the first current collecting member 2222, which is not described herein again. In some other embodiments, the second electrode lead-out portion 223 includes a second tab 2231, the second tab 2231 has a polarity opposite to that of the first tab 2221, and the second tab 2231 is connected to the second electrode terminal 27. The third insulating member 26 may be connected to the second tab 2231, and a specific manner in which the third insulating member 26 is connected to the second tab 2231 may refer to the manner in which the second insulating member 24 is connected to the first tab 2221, which is not described herein again.

When the first electrode lead-out portion 222 and the second electrode lead-out portion 223 are located at two ends of the main body portion 221, the battery cell 20 further includes a third insulating member 26 and a fourth insulating member, and the housing 21 has a second wall portion 2122. The second wall portion 2122 and the first wall portion 213 are opposite each other. The second electrode lead-out portion 223 is provided at an end of the main body portion 221 facing the second wall portion 2122 along the first direction. Along the first direction, the fourth insulating member is provided on a surface of the second wall portion 2122 facing the electrode assembly 22, and the fourth insulating member is configured to insulate and isolate the second electrode lead-out portion 223 and the second wall portion 2122. Along the first direction, at least a portion of the third insulating member 26 is provided between the second electrode lead-out portion 223 and the second wall portion 2122, a material damage temperature of the third insulating member 26 is higher than a material damage temperature of the fourth insulating member, and the third insulating member 26 is configured to insulate and isolate the second electrode lead-out portion 223 and the second wall portion 2122 when the fourth insulating member is melted.

The battery cell 20 includes a second electrode terminal 27, and the second electrode terminal 27 is provided on the second wall portion 2122. In some embodiments, the second electrode lead-out portion 223 may include a second tab 2231 and a second current collecting member 2232, the second tab 2231 has a polarity opposite to that of the first tab 2221, the second tab 2231 is connected to an end of the main body portion 221 facing the second wall portion 2122 along the first direction, and the second current collecting member 2232 connects the second electrode terminal 27 and the second tab 2231. The third insulating member 26 may be connected to the second current collecting member 2232, and a specific manner in which the third insulating member 26 is connected to the second current collecting member 2232 may refer to the manner in which the second insulating member 24 is connected to the first current collecting member 2222, which is not described herein again. In some other embodiments, the second electrode lead-out portion 223 includes a second tab 2231, the second tab 2231 has a polarity opposite to that of the first tab 2221, and the second tab 2231 is connected to the second electrode terminal 27. The third insulating member 26 may be connected to the second tab 2231, and a specific manner in which the third insulating member 26 is connected to the second tab 2231 may refer to the manner in which the second insulating member 24 is connected to the first tab 2221, which is not described herein again.

In some embodiments, the third insulating member 26 is adhered to the second electrode lead-out portion 223.

In an embodiment in which the second electrode lead-out portion 223 includes a second tab 2231 and a second current collecting member 2232, the third insulating member 26 is adhered to the second current collecting member 2232. In an embodiment in which the second electrode lead-out portion 223 includes only the second tab 2231, the third insulating member 26 is adhered to the second tab 2231.

By adhering the third insulating member 26 to the second electrode lead-out portion 223, the third insulating member 26 is connected to the second electrode lead-out portion 223 simply and conveniently, which is conducive to limiting the position of the third insulating member 26, allowing the third insulating member 26 to stably exert an insulating effect.

In some other embodiments, the third insulating member 26 wraps the second electrode lead-out portion 223.

In an embodiment in which the second electrode lead-out portion 223 includes a second tab 2231 and a second current collecting member 2232, the third insulating member 26 may wrap only the second electrode lead-out portion 223 or wrap the second tab 2231 and the second electrode lead-out portion 223. In an embodiment in which the second electrode lead-out portion 223 includes only the second tab 2231, the third insulating member 26 wraps the second tab 2231.

By making the third insulating member 26 wrap the second electrode lead-out portion 223, on one hand, the second electrode lead-out portion 223 can be well covered, so that the second electrode lead-out portion 223 and the first wall portion 213 or the second wall portion 2122 are insulated and isolated. On the other hand, when the third insulating member 26 wraps the second electrode lead-out portion 223, the third insulating member 26 is less likely to be deviated or displaced relative to the second electrode lead-out portion 223, so that the third insulating member 26 can better perform an insulating function.

In some embodiments, the third insulating member 26 is an insulating film connected to the second electrode lead-out portion 223.

Optionally, the third insulating member 26 is a PI film (Polyimide Film, polyimide film) connected to the second electrode lead-out portion 223.

The third insulating member 26 is an insulating film. The insulating film can effectively insulate and isolate the second electrode lead-out portion 223 and the first wall portion 213 or insulate and isolate the second electrode lead-out portion 223 and the second wall portion 2122 without occupying too much space inside the housing 21, so that the battery cell 20 can still have a high energy density.

In some embodiments, the material damage temperature of the third insulating member 26 is higher than or equal to 300°C.

When thermal runaway occurs in another battery cell 20 adjacent to the battery cell 20, the temperature inside the battery cell 20 can rise to 200°C. However, the material damage temperature of the third insulating member 26 is higher than or equal to 300°C. Therefore, when thermal runaway occurs in another battery cell 20 adjacent to the battery cell 20, it is less likely to cause the third insulating member 26 to be melted, so that the third insulating member 26 can play an insulating and isolating role, reducing the risk of short circuit in the battery cell 20.

Optionally, a material of the third insulating member 26 includes at least one of polyimide, polyether ether ketone, and polytetrafluoroethylene.

Polyimide, polyether ether ketone, and polytetrafluoroethylene have good high temperature resistance and good insulating effect, and can insulate and isolate the second electrode lead-out portion 223 and the first wall portion 213 or insulate and isolate the second electrode lead-out portion 223 and the second wall portion 2122 at temperatures higher than 200°C, reducing the risk of short circuit in the battery cell 20, thereby improving the reliability of the battery cell 20.

In some embodiments, a positive electrode material of the battery cell 20 includes lithium-containing phosphate.

In a battery cell 20 whose positive electrode material includes lithium-containing phosphate, a large amount of heat is generated during thermal runaway, which easily causes melting of the first insulating members 23 of the battery cell 20 and another battery cell 20 adjacent thereto. The provision of the second insulating member 24 in the battery cell 20 is more conducive to reducing the risk of short circuit caused by contact between the first electrode lead-out portion 222 and the first wall portion 213. To be specific, the effect of providing the second insulating member 24 in the battery cell 20 whose positive electrode material includes lithium-containing phosphate is better.

Optionally, the lithium-containing phosphate includes at least one of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon.

An embodiment of the present application further provides a battery 100, where the battery 100 includes the battery cell 20 described above.

An embodiment of the present application further provides an electric device, where the electric device includes the battery cell 20 described above.

According to some embodiments of the present application, reference is made to FIG. 3 to FIG. 10.

An embodiment of the present application provides a battery cell 20. The battery cell 20 includes a housing 21, an electrode assembly 22, a first insulating member 23, and a second insulating member 24. The housing 21 has a first wall portion 213, and the electrode assembly 22 is accommodated in the housing 21. The electrode assembly 22 includes a first electrode lead-out portion 222 and a main body portion 221, and the first electrode lead-out portion 222 is provided at an end of the main body portion 221 facing the first wall portion 213 along a first direction. Along the first direction, the first insulating member 23 is provided on a surface of the first wall portion 213 facing the electrode assembly 22, and the first insulating member 23 is configured to insulate and isolate the first electrode lead-out portion 222 and the first wall portion 213. Along the first direction, at least a portion of the second insulating member 24 is provided between the first electrode lead-out portion 222 and the first wall portion 213, a material damage temperature of the second insulating member 24 is higher than a material damage temperature of the first insulating member 23, and the second insulating member 24 is configured to insulate and isolate the first electrode lead-out portion 222 and the first wall portion 213 when the first insulating member 23 is melted. The battery cell 20 is provided with the first insulating member 23 and the second insulating member 24. During normal use, both the first insulating member 23 and the second insulating member 24 can insulate and isolate the first electrode lead-out portion 222 and the first wall portion 213, reducing the risk of short circuit caused by contact between the first electrode lead-out portion 222 and the first wall portion 213. Since the material damage temperature of the second insulating member 24 is higher than the material damage temperature of the first insulating member 23, when thermal runaway occurring in another battery cell 20 adjacent to the battery cell 20 causes the first insulating member 23 of the battery cell 20 to be melted, the second insulating member 24 can still play a role in insulating and isolating the first electrode lead-out portion 222 and the first wall portion 213 to some extent, reducing the risk of short circuit caused by contact between the first electrode lead-out portion 222 and the first wall portion 213. In this way, even if thermal runaway occurs in another battery cell 20 adjacent to the battery cell 20, it is less likely to cause short circuit in the battery cell 20 and thus avoids continuing to trigger thermal runaway, which is conducive to limiting heat diffusion and improving the reliability of the battery cell 20.

The battery cell 20 includes a first electrode terminal 25, and the first electrode terminal 25 is provided on the first wall portion 213. The first electrode lead-out portion 222 includes a first tab 2221 and a first current collecting member 2222, the first tab 2221 is connected to an end of the main body portion 221 facing the first wall portion 213 along the first direction, and the first current collecting member 2222 connects the first electrode terminal 25 and the first tab 2221. The second insulating member 24 is connected to the first current collecting member 2222, and along the first direction, at least a portion of the second insulating member 24 is located between the first current collecting member 2222 and the first wall portion 213. The first tab 2221 is connected to the first electrode terminal 25 through the first current collecting member 2222. The first current collecting member 2222 is more likely to come into contact with the first wall portion 213 to cause a short circuit as compared to the first tab 2221. Therefore, by connecting the second insulating member 24 to the first current collecting member 2222 and making at least a portion of the second insulating member 24 located between the first current collecting member 2222 and the first wall portion 213, the first current collecting member 2222 and the first wall portion 213 are insulated and isolated, so that the second insulating member 24 has a better insulating effect, further reducing the risk of short circuit in the battery cell 20, thereby helping to improve the reliability of the battery cell 20.

In some embodiments, the first current collecting member 2222 includes a body portion 22221 and a protrusion portion 22222, the protrusion portion 22222 protrudes from the body portion 22221 along the first direction, the body portion 22221 is connected to the first tab 2221, and the protrusion portion 22222 is connected to the first electrode terminal 25. Along the first direction, the body portion 22221 has a first surface 2222a closest to the first wall portion 213, and the second insulating member 24 covers at least a portion of the first surface 2222a. The first surface 2222a is a surface of the body portion 22221 closest to the first wall portion 213. To be specific, the first surface 2222a is a surface on the first current collecting member 2222 that is most likely to come into contact with the first wall portion 213 to cause a short circuit. By making the second insulating member 24 cover at least a portion of the first surface 2222a, the first current collecting member 2222 and the first wall portion 213 are insulated and isolated, so that the second insulating member 24 has a better insulating effect, which is conducive to reducing the risk of short circuit in the battery cell 20, thereby helping to improve the reliability of the battery cell 20.

Along the first direction, the body portion 22221 includes a first connecting portion 22223 and a second connecting portion 22224, the second connecting portion 22224 is connected to the first connecting portion 22223, the first tab 2221 is connected to the first connecting portion 22223. Along the first direction, a surface of the first connecting portion 22223 facing the first wall portion 213 is the first surface 2222a, the second connecting portion 22224 has a second surface 2222b facing the first wall portion 213, the first surface 2222a is closer to the first wall portion 213 than the second surface 2222b, and the protrusion portion 22222 protrudes from the second surface 2222b. The second insulating member 24 covers at least a portion of the second surface 2222b. The body portion 22221 includes the first surface 2222a and the second surface 2222b, where the first surface 2222a is a surface closest to the first wall portion 213, and a distance between the second surface 2222b and the first wall portion 213 is greater than a distance between the first surface 2222a and the first wall portion 213. Since both the first surface 2222a and the second surface 2222b have the risk of coming into contact with the first wall portion 213 to cause a short circuit, by making the second insulating member 24 cover at least a portion of the first surface 2222a and at least a portion of the second surface 2222b, the first current collecting member 2222 and the first wall portion 213 are better insulated and isolated, so that the second insulating member 24 has a better insulating effect, which is conducive to further reducing the risk of short circuit in the battery cell 20, thereby helping to further improve the reliability of the battery cell 20.

The battery cell 20 includes a plurality of electrode assemblies 22, the plurality of electrode assemblies 22 are arranged along a second direction, and the second direction intersects the first direction. The second surface 2222b includes a covered region 22225 covered by the second insulating member 24 and an uncovered region 22226 not covered by the second insulating member 24. Along the second direction, two sides of the uncovered region 22226 are both connected to the covered region 22225, and the protrusion portion 22222 is provided on the uncovered region 22226. Two sides of the uncovered region 22226 are both connected to the covered region 22225. In comparison, the covered region 22225 is closer to another battery cell 20 adjacent to the battery cell 20. When thermal runaway occurs in the another battery cell 20, along the second direction, regions of the first insulating member 23 near two ends have higher temperatures and are more likely to be melted, while a position of the first insulating member 23 near the middle has a lower temperature and is relatively less likely to be melted. The covered region 22225 corresponds to the regions of the first insulating member 23 that are likely to be melted, and the uncovered region 22226 corresponds to the region of the first insulating member 23 that is relatively less likely to be melted. The first insulating member 23 and the second insulating member 24 cooperate to effectively insulate and isolate the first current collecting member 2222 and the first wall portion 213, which is conducive to reducing the risk of short circuit in the battery cell 20, thereby helping to improve the reliability of the battery cell 20.

In some other embodiments, the battery cell 20 includes a first electrode terminal 25, and the first electrode terminal 25 is provided on the first wall portion 213. The first electrode lead-out portion 222 includes a first tab 2221, and the first tab 2221 is connected to the first electrode terminal 25. The second insulating member 24 is connected to the first tab 2221, and along the first direction, at least a portion of the second insulating member 24 is located between the first tab 2221 and the first wall portion 213. The first tab 2221 is directly connected to the first electrode terminal 25. Connecting the second insulating member 24 to the first tab 2221 and making at least a portion of the second insulating member 24 located between the first tab 2221 and the first wall portion 213, the first tab 2221 and the first wall portion 213 are insulated and isolated, so that the second insulating member 24 has a better insulating effect, further reducing the risk of short circuit in the battery cell 20, thereby helping to improve the reliability of the battery cell 20.

The first insulating member 23 can also insulate and isolate the second electrode lead-out portion 223 and the first wall portion 213. The battery cell 20 further includes a third insulating member 26. Along the first direction, at least a portion of the third insulating member 26 is provided between the second electrode lead-out portion 223 and the first wall portion 213, a material damage temperature of the third insulating member 26 is higher than the material damage temperature of the first insulating member 23, and the third insulating member 26 is configured to insulate and isolate the second electrode lead-out portion 223 and the first wall portion 213 when the first insulating member 23 is melted.

The battery cell 20 includes a second electrode terminal 27, and the second electrode terminal 27 is provided on the first wall portion 213. In some embodiments, the second electrode lead-out portion 223 may include a second tab 2231 and a second current collecting member 2232, the second tab 2231 has a polarity opposite to that of the first tab 2221, the second tab 2231 is connected to an end of the main body portion 221 facing the first wall portion 213 along the first direction, and the second current collecting member 2232 connects the second electrode terminal 27 and the second tab 2231. The third insulating member 26 may be connected to the second current collecting member 2232, and a specific manner in which the third insulating member 26 is connected to the second current collecting member 2232 may refer to the manner in which the second insulating member 24 is connected to the first current collecting member 2222, which is not described herein again.

The second insulating member 24 is an insulating film adhered to the first current collecting member 2222. By adhering the second insulating member 24 to the first current collecting member 2222, the second insulating member 24 is connected to the first current collecting member 2222 simply and conveniently, which is conducive to limiting the position of the second insulating member 24, allowing the second insulating member 24 to stably exert an insulating effect. The second insulating member 24 is an insulating film. The insulating film can effectively insulate and isolate the first current collecting member 2222 and the first wall portion 213 without occupying too much space inside the housing 21, so that the battery cell 20 can still have a high energy density.

The above descriptions are only preferred embodiments of the present application and are not intended to limit the present application. For those skilled in the art, various changes and modifications may be made to the present application. Any modifications, equivalent replacements, improvements, and the like made within the spirit and principles of the present application shall be included within the protection scope of the present application.

## Claims

1. A battery cell, comprising:
a housing, having a first wall portion;
an electrode assembly accommodated in the housing, wherein the electrode assembly comprises a first electrode lead-out portion and a main body portion, the first electrode lead-out portion is provided at an end of the main body portion facing the first wall portion along a first direction;
a first insulating member, wherein along the first direction, the first insulating member is provided on a surface of the first wall portion facing the electrode assembly, the first insulating member is configured to insulate and isolate the first electrode lead-out portion and the first wall portion; and
a second insulating member, wherein along the first direction, at least a portion of the second insulating member is provided between the first electrode lead-out portion and the first wall portion, and a material damage temperature of the second insulating member is higher than a material damage temperature of the first insulating member.

2. The battery cell according to claim 1, wherein the second insulating member is connected to the first electrode lead-out portion.

3. The battery cell according to claim 2, wherein the battery cell comprises a first electrode terminal, and the first electrode terminal is provided on the first wall portion; and
the first electrode lead-out portion comprises a first tab and a first current collecting member, the first tab is connected to an end of the main body portion facing the first wall portion along the first direction, and the first current collecting member connects the first electrode terminal and the first tab;
wherein the second insulating member is connected to the first current collecting member, and along the first direction, at least a portion of the second insulating member is located between the first current collecting member and the first wall portion.

4. The battery cell according to claim 3, wherein the first current collecting member comprises a body portion and a protrusion portion, the protrusion portion protrudes from the body portion along the first direction, the body portion is connected to the first tab, and the protrusion portion is connected to the first electrode terminal;
wherein along the first direction, the body portion has a first surface closest to the first wall portion, and the second insulating member covers at least a portion of the first surface.

5. The battery cell according to claim 4, wherein along the first direction, the body portion comprises a first connecting portion and a second connecting portion; the second connecting portion is connected to the first connecting portion; the first tab is connected to the first connecting portion; along the first direction, a surface of the first connecting portion facing the first wall portion is the first surface; the second connecting portion has a second surface facing the first wall portion; the first surface is closer to the first wall portion than the second surface; the protrusion portion protrudes from the second surface; and the second insulating member covers at least a portion of the second surface.

6. The battery cell according to claim 5, wherein the battery cell comprises a plurality of electrode assemblies, the plurality of electrode assemblies are arranged along a second direction, and the second direction intersects the first direction; and
the second surface comprises a covered region covered by the second insulating member and an uncovered region not covered by the second insulating member; and along the second direction, two sides of the uncovered region are both connected to the covered region, and the protrusion portion is provided on the uncovered region.

7. The battery cell according to claim 6, wherein along the second direction, a minimum width of the second insulating member is D, satisfying: D ≥ 5 mm.

8. The battery cell according to claim 7, wherein 5 mm ≤ D ≤ 25 mm.

9. The battery cell according to any one of claims 5 to 8, wherein the battery cell comprises a plurality of electrode assemblies, the plurality of electrode assemblies are arranged along a second direction, and the second direction intersects the first direction; and
the body portion comprises a plurality of first connecting portions, the plurality of first connecting portions are arranged at intervals along the second direction, the second connecting portion connects the plurality of first connecting portions, and each first connecting portion is connected to the first tab of one electrode assembly.

10. The battery cell according to any one of claims 4 to 9, wherein along the first direction, the second insulating member covers an entire region of a surface of the body portion facing the first wall portion that is not occupied by the protrusion portion.

11. The battery cell according to any one of claims 4 to 10, wherein the second insulating member is provided with an avoidance hole, and the protrusion portion passes through the avoidance hole and is connected to the first electrode terminal.

12. The battery cell according to any one of claims 3 to 11, wherein the first tab is connected to a side of the first current collecting member facing away from the first wall portion.

13. The battery cell according to claim 2, wherein the battery cell comprises a first electrode terminal, and the first electrode terminal is provided on the first wall portion; and
the first electrode lead-out portion comprises a first tab and a first current collecting member, the first tab is connected to an end of the main body portion facing the first wall portion along the first direction, the first tab is connected to a surface of the first current collecting member facing the first wall portion, and the first current collecting member is connected to the first electrode terminal;
wherein the second insulating member is connected to a surface of the first tab closest to the first wall portion.

14. The battery cell according to claim 2, wherein the battery cell comprises a first electrode terminal, and the first electrode terminal is provided on the first wall portion; and
the first electrode lead-out portion comprises a first tab, and the first tab is connected to the first electrode terminal;
wherein the second insulating member is connected to the first tab, and along the first direction, at least a portion of the second insulating member is located between the first tab and the first wall portion.

15. The battery cell according to claim 14, wherein along the first direction, a projection of the second insulating member does not overlap with a projection of the first electrode terminal.

16. The battery cell according to claim 14 or 15, wherein the second insulating member is provided with an avoidance hole, and the first electrode terminal passes through the avoidance hole and is connected to the first tab.

17. The battery cell according to any one of claims 2 to 16, wherein the second insulating member is adhered to the first electrode lead-out portion.

18. The battery cell according to any one of claims 2 to 17, wherein the second insulating member wraps the first electrode lead-out portion.

19. The battery cell according to any one of claims 2 to 18, wherein the second insulating member is an insulating film connected to the first electrode lead-out portion.

20. The battery cell according to claim 19, wherein a thickness of the insulating film is H, satisfying: 0.01 mm ≤ H ≤ 0.5 mm.

21. The battery cell according to claim 20, wherein 0.05 mm ≤ H ≤ 0.2 mm.

22. The battery cell according to any one of claims 1 to 21, wherein the housing has a third wall portion adjacent to the first wall portion, the third wall portion is a wall portion with the largest outer surface area in the housing; and
the second insulating member comprises a first insulating portion and a second insulating portion, at least a portion of the first insulating portion is provided between the first electrode lead-out portion and the first wall portion along the first direction, and at least a portion of the second insulating portion is provided between the first electrode lead-out portion and the third wall portion along a thickness direction of the third wall portion.

23. The battery cell according to claim 22, wherein along the thickness direction of the third wall portion, a projection of the first electrode lead-out portion is entirely located within the second insulating portion.

24. The battery cell according to claim 22 or 23, wherein along the thickness direction of the third wall portion, a portion of the second insulating portion is provided between the main body portion and the third wall portion.

25. The battery cell according to claim 24, wherein the second insulating portion is connected to the main body portion.

26. The battery cell according to claim 24 or 25, wherein along the thickness direction of the third wall portion, the main body portion comprises a fourth surface facing the third wall portion, and the second insulating portion covers the entire fourth surface.

27. The battery cell according to any one of claims 22 to 26, wherein the housing has a second wall portion, and along the first direction, the first wall portion and the second wall portion are opposite each other, and the third wall portion connects the first wall portion and the second wall portion; and
the second insulating member further comprises a third insulating portion, the second insulating portion connects the first insulating portion and the third insulating portion, and along the first direction, at least a portion of the third insulating portion is provided between the main body portion and the second wall portion.

28. The battery cell according to any one of claims 22 to 27, wherein the electrode assembly comprises a second electrode lead-out portion, the first electrode lead-out portion and the second electrode lead-out portion are provided at the same end of the main body portion, and the second electrode lead-out portion has a polarity opposite to that of the first electrode lead-out portion; and
along the first direction, a portion of the first insulating portion is provided between the second electrode lead-out portion and the first wall portion.

29. The battery cell according to any one of claims 22 to 28, wherein the electrode assembly comprises a second electrode lead-out portion, the first electrode lead-out portion and the second electrode lead-out portion are provided at the same end of the main body portion, and the second electrode lead-out portion has a polarity opposite to that of the first electrode lead-out portion; and
the second insulating member further comprises a fourth insulating portion, the second insulating portion connects the first insulating portion and the fourth insulating portion, and along the first direction, at least a portion of the fourth insulating portion is provided between the second electrode lead-out portion and the first wall portion.

30. The battery cell according to claim 29, wherein the first electrode lead-out portion and the second electrode lead-out portion are spaced apart along a third direction; and
along the third direction, the first insulating portion and the fourth insulating portion are spaced apart.

31. The battery cell according to claim 29, wherein along the first direction, the first insulating portion and the fourth insulating portion are partially stacked.

32. The battery cell according to any one of claims 1 to 31, wherein the electrode assembly comprises a second electrode lead-out portion, the first electrode lead-out portion and the second electrode lead-out portion are provided at the same end of the main body portion, and the second electrode lead-out portion has a polarity opposite to that of the first electrode lead-out portion; and
along the first direction, a portion of the second insulating member is provided between the second electrode lead-out portion and the first wall portion.

33. The battery cell according to any one of claims 1 to 31, wherein the electrode assembly comprises a second electrode lead-out portion, the first electrode lead-out portion and the second electrode lead-out portion are provided at the same end of the main body portion, the second electrode lead-out portion has a polarity opposite to that of the first electrode lead-out portion, and the first insulating member is further configured to insulate and isolate the second electrode lead-out portion and the first wall portion; and
the battery cell further comprises a third insulating member; along the first direction, at least a portion of the third insulating member is provided between the second electrode lead-out portion and the first wall portion; and a material damage temperature of the third insulating member is higher than the material damage temperature of the first insulating member.

34. The battery cell according to claim 33, wherein the first electrode lead-out portion and the second electrode lead-out portion are spaced apart along a third direction; and
along the third direction, the second insulating member and the third insulating member are spaced apart.

35. The battery cell according to claim 33, wherein along the first direction, the second insulating member and the third insulating member are partially stacked.

36. The battery cell according to any one of claims 1 to 35, wherein the material damage temperature of the second insulating member is higher than or equal to 300°C.

37. The battery cell according to claim 36, wherein a material of the second insulating member comprises at least one of polyimide, polyether ether ketone, and polytetrafluoroethylene.

38. The battery cell according to any one of claims 1 to 37, wherein a positive electrode material of the battery cell comprises lithium-containing phosphate.

39. The battery cell according to claim 38, wherein the lithium-containing phosphate comprises at least one of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon.

40. A battery, comprising the battery cell according to any one of claims 1 to 39.

41. An electric device, comprising the battery cell according to any one of claims 1 to 39.
